# EUROPEAN PATENT SPECIFICATION

(11) **EP 4 618 009 B1**
(45) Date of publication and mention of the grant of the patent: **04.11.2026**
(21) Application number: 24163929.3
(22) Date of filing: 15.03.2024
(51) Int. Cl.: G06T 7/00

(54) **GENERATION OF A SYNTHETIC MEDICAL IMAGE**
ERZEUGUNG EINES SYNTHETISCHEN MEDIZINISCHEN BILDES
GÉNÉRATION D'UNE IMAGE MÉDICALE SYNTHÉTIQUE

(43) Date of publication of application: 17.09.2025
(73) Proprietor: Bayer Aktiengesellschaft, 51373 Leverkusen (DE)
(72) Inventor: Hooge, Jens, 51373 Leverkusen (DE); Louro Costa Osorio, Pedro, 08970 Sant Juan Despi (ES); Jimenez, Guillermo, 08970 Sant Juan Despi (ES)
(74) Representative: BIP Patents

(56) References cited:
- US-A1- 2023 360 758
- US-A1- 20240 046 473
- ZHENG KUN ET AL: "Conditional introspective variational autoencoder for image synthesis", IEEE ACCESS, vol. 8, 20 August 2020 (2020-08-20), pages 153905 - 153913, XP093187445, DOI: 10.1109/ACCESS.2020.3018228

## Description

### FIELD OF THE DISCLOSURE

Systems, methods, and computer programs disclosed herein relate to training a machine learning model and using the trained machine learning model to generate a synthetic medical image of an examination region of an examination object representing the examination region at one point in time during a dynamic examination of the examination region based on one or more medical images representing the examination region at another point in time or multiple other points in time.

### BACKGROUND

US2024046473A1 relates to techniques for obtaining a synthetic immunohistochemistry (IHC) image from a histochemically stained image.

Dynamic medical imaging refers to the generation of medical images of an examination region of an examination object at different points in time in order to visualize changes in the examination region over time.

Dynamic medical imaging can be used for diagnostic purposes. One example is the detection and differential diagnosis of focal liver lesions using dynamic contrast-enhanced magnetic resonance imaging (MRI) with a hepatobiliary contrast agent.

A hepatobiliary contrast agent such as Primovist^{®} can be used to detect tumors in the liver. Healthy liver tissue is primarily supplied with blood via the portal vein (vena portae), while most primary tumors are supplied via the hepatic artery (arteria hepatica). After intravenous bolus injection of a contrast agent, a time delay can be observed between the signal enhancement of the healthy liver parenchyma and the tumor.

In addition to malignant tumors, benign lesions such as cysts, hemangiomas and focal nodular hyperplasia are also frequently found in the liver. For correct treatment planning, these must be differentiated from malignant tumors. Primovist^{®} can be used to detect benign and malignant focal liver lesions. It provides information about the character of these lesions using T1-weighted MRI. The different blood supply of liver and tumor and the temporal course of contrast enhancement are used for differentiation.

Tracking the distribution of the contrast agent over time therefore offers a good opportunity for the detection and differential diagnosis of focal liver lesions.

However, a dynamic examination may take a comparatively long time. During this time, the patient should largely avoid movement in order to minimize movement artefacts in the medical images. The prolonged restriction of movement can be uncomfortable for the patient. It would be desirable to be able to speed up dynamic examinations.

Furthermore, it is possible that during a dynamic examination of an examination region of an examination object, one or more medical images of the examination region are of lower quality due to movements of the examination object and/or for other reasons. It would therefore be desirable to be able to replace poor quality medical images without having to repeat the entire examination.

### SUMMARY

These and other tasks are solved by the subject matter of the independent claims of the present disclosure. Preferred embodiments are defined in the dependent claims, the description and the drawings.

In a first aspect, the present disclosure relates to a computer-implemented method comprising:
- providing a plurality of data sets of a plurality of examination objects, each data set comprising at least two medical images, a first medical image and a second medical image, wherein the first medical image represents an examination region of an examination object at a first point in time and the second medical image represents the examination region of the examination object at a second point in time, wherein the first point in time and the second point in time are different points in time,
- providing an image encoder, wherein the image encoder is configured and trained to generate an image embedding based on a medical image,
- for each data set: generating an image embedding of the first medical image using the image encoder,
- providing a conditional generative model, wherein the conditional generative model is configured to generate a reconstructed medical image based on a medical image, a condition and model parameters,
- training the conditional generative model, wherein the training comprises, for each data set:
   - generating a reconstructed second medical image based on the second medical image and the image embedding of the first medical image, wherein the image embedding of the first medical image is used as a condition in the generation of the reconstructed second medical image,
   - determining a deviation between the second medical image and the reconstructed second medical image,
   - reducing the deviation by modifying model parameters of the conditional generative model,
- receiving at least one medical image of a new examination object, wherein the at least one medical image represents the examination region of the new examination object at the first time point,
- generating at least one image embedding based on the at least one medical image of the new examination object using the image encoder,
- generating a synthetic medical image using the at least one image embedding as a conditional input to the trained conditional generative model,
- outputting and/or storing the synthetic medical image and/or transmitting the synthetic medical image to a separate computer system,
   wherein the at least two medical images of each data set are MRI images and/or CT images, and the at least one medical image of the new examination object is an MRI image or CT image.

In another aspect, the present disclosure provides a computer system comprising:
a processor; and
a memory storing an application program configured to perform, when executed by the processor, an operation, the operation comprising:
   - providing a plurality of data sets of a plurality of examination objects, each data set comprising at least two medical images, a first medical image and a second medical image, wherein the first medical image represents an examination region of an examination object at a first point in time and the second medical image represents the examination region of the examination object at a second point in time, wherein the first point in time and the second point in time are different points in time,
   - providing an image encoder, wherein the image encoder is configured and trained to generate an image embedding based on a medical image,
   - for each data set: generating an image embedding of the first medical image using the image encoder,
   - providing a conditional generative model, wherein the conditional generative model is configured to generate a reconstructed medical image based on a medical image, a condition and model parameters,
   - training the conditional generative model, wherein the training comprises, for each data set:
      - generating a reconstructed second medical image based on the second medical image and the image embedding of the first medical image, wherein the image embedding of the first medical image is used as a condition in the generation of the reconstructed second medical image,
      - determining a deviation between the second medical image and the reconstructed second medical image,
      - reducing the deviation by modifying model parameters of the conditional generative model,
   - receiving at least one medical image of a new examination object, wherein the at least one medical image represents the examination region of the new examination object at the first time point,
   - generating at least one image embedding based on the at least one medical image of the new examination object using the image encoder,
   - generating a synthetic medical image using the at least one image embedding as a conditional input to the trained conditional generative model,
   - outputting and/or storing the synthetic medical image and/or transmitting the synthetic medical image to a separate computer system, wherein the at least two medical images of each data set are MRI images and/or CT images, and the at least one medical image of the new examination object is an MRI image or CT image.

In another aspect, the present disclosure provides a non-transitory computer readable storage medium having stored thereon software instructions that, when executed by a processor of a computer system, cause the computer system to execute the following steps:
- providing a plurality of data sets of a plurality of examination objects, each data set comprising at least two medical images, a first medical image and a second medical image, wherein the first medical image represents an examination region of an examination object at a first point in time and the second medical image represents the examination region of the examination object at a second point in time, wherein the first point in time and the second point in time are different points in time,
- providing an image encoder, wherein the image encoder is configured and trained to generate an image embedding based on a medical image,
- for each data set: generating an image embedding of the first medical image using the image encoder,
- providing a conditional generative model, wherein the conditional generative model is configured to generate a reconstructed medical image based on a medical image, a condition and model parameters,
- training the conditional generative model, wherein the training comprises, for each data set:
   - generating a reconstructed second medical image based on the second medical image and the image embedding of the first medical image, wherein the image embedding of the first medical image is used as a condition in the generation of the reconstructed second medical image,
   - determining a deviation between the second medical image and the reconstructed second medical image,
   - reducing the deviation by modifying model parameters of the conditional generative model,
- receiving at least one medical image of a new examination object, wherein the at least one medical image represents the examination region of the new examination object at the first time point,
- generating at least one image embedding based on the at least one medical image of the new examination object using the image encoder,
- generating a synthetic medical image using the at least one image embedding as a conditional input to the trained conditional generative model,
- outputting and/or storing the synthetic medical image and/or transmitting the synthetic medical image to a separate computer system, wherein the at least two medical images of each data set are MRI images and/or CT images, and the at least one medical image of the new examination object is an MRI image or CT image.

Further aspects are disclosed in the description.

### BRIEF DESCRIPTION OF THE DRAWINGS

Fig. 1 shows schematically an embodiment of the training of the conditional generative model.
Fig. 2 shows schematically another embodiment of the training of the conditional generative model.
Fig. 3 shows a schematic example of how an image embedding is generated from a medical image.
Fig. 4 shows a schematic example of how parts of an image embedding can be masked.
Fig. 5 shows a schematic example of the generation of several image embeddings and the combination of the image embeddings into a single image embedding.
Fig. 6 shows an example of masking patches and/or image tokens.
Fig. 7 shows another example of masking patches and/or image tokens.
Fig. 8 shows another example of generating an image embedding based on multiple medical images.
Fig. 9 shows an embodiment for generating a synthetic medical image based on a medical image.
Fig. 10 shows an embodiment for generating a synthetic medical image based on several medical images.
Fig. 11 shows another embodiment for generating a synthetic medical image based on several medical images.
Fig. 12 shows an embodiment of the computer-implemented method of the present disclosure in the form of a flow chart.
Fig. 13 illustrates a computer system according to some example implementations of the present disclosure in more detail.

### DETAILED DESCRIPTION

The invention will be more particularly elucidated below without distinguishing between the aspects of the invention (computer-implemented method, computer system, computer-readable storage medium use, contrast agent for use, kit). On the contrary, the following elucidations are intended to apply analogously to all the aspects of the invention, irrespective of in which context (computer-implemented method, computer system, computer-readable storage medium, use, contrast agent for use, kit) they occur.

If steps are stated in an order in the present description or in the claims, this does not necessarily mean that the invention is restricted to the stated order. On the contrary, it is conceivable that the steps can also be executed in a different order or else in parallel to one another, unless one step builds upon another step, this absolutely requiring that the building step be executed subsequently (this being, however, clear in the individual case). The stated orders are thus preferred embodiments of the present disclosure.

As used herein, the articles "a" and "an" are intended to include one or more items and may be used interchangeably with "one or more" and "at least one." As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

Unless defined otherwise, all technical and scientific terms used herein have the same meaning as commonly understood by one of ordinary skill in the art.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The present disclosure provides means for generating a synthetic medical image of an examination region of an examination object.

The term "synthetic" means that the synthetic medical image is not the (direct) result of a physical measurement on a real object under examination, but that the synthetic medical image has been generated by a machine learning model. A synonym for the term "synthetic" is the term "artificial". A synthetic medical image may however be based on one or more measured medical images, i.e., the machine learning model may be able to generate the synthetic medical image based on one or more measured medical images (and/or other/further data).

The "examination object" is preferably a living being, more preferably a mammal, most preferably a human.

The "examination region" is a part of the examination object, for example an organ or part of an organ or a plurality of organs or another part of the examination object.

For example, the examination region may be a liver, kidney, heart, lung, brain, stomach, bladder, prostate, intestine, thyroid, eye, breast or a part of said parts or another part of the body of a mammal (for example a human).

In one embodiment, the examination region includes a liver or part of a liver or the examination region is a liver or part of a liver of a mammal, preferably a human.

In a further embodiment, the examination region includes a brain or part of a brain or the examination region is a brain or part of a brain of a mammal, preferably a human.

In a further embodiment, the examination region includes a heart or part of a heart or the examination region is a heart or part of a heart of a mammal, preferably a human.

In a further embodiment, the examination region includes a thorax or part of a thorax or the examination region is a thorax or part of a thorax of a mammal, preferably a human.

In a further embodiment, the examination region includes a stomach or part of a stomach or the examination region is a stomach or part of a stomach of a mammal, preferably a human.

In a further embodiment, the examination region includes a pancreas or part of a pancreas or the examination region is a pancreas or part of a pancreas of a mammal, preferably a human.

In a further embodiment, the examination region includes a kidney or part of a kidney or the examination region is a kidney or part of a kidney of a mammal, preferably a human.

In a further embodiment, the examination region includes one or both lungs or part of a lung of a mammal, preferably a human.

In a further embodiment, the examination region includes a thyroid or part of a thyroid of a mammal, preferably a human.

In a further embodiment, the examination region includes an eye or part of an eye of a mammal, preferably a human.

In a further embodiment, the examination region includes a breast or part of a breast or the examination region is a breast or part of a breast of a female mammal, preferably a female human.

In a further embodiment, the examination region includes a prostate or part of a prostate or the examination region is a prostate or part of a prostate of a male mammal, preferably a male human.

The term "image" as used herein means preferably a data structure that represents a spatial distribution of a physical signal. The spatial distribution may be of any dimension, for example 2D, 3D, 4D or any higher dimension. The spatial distribution may be of any shape, for example forming a grid and thereby defining pixels or voxels, the grid being possibly irregular or regular. The physical signal may be any signal, for example proton density, tissue echogenicity, tissue radiolucency, measurements related to the blood flow, information of rotating hydrogen nuclei in a magnetic field, color, level of gray, depth, surface or volume occupancy, such that the image may be a 2D or 3D RGB/grayscale/depth image, or a 3D surface/volume occupancy model. An image is usually composed of discrete image elements (e.g., pixels for 2D images, voxels for 3D images, doxels for 4D images).

The present invention is described in this disclosure predominantly using the example of images representing an examination region of an examination object in real space. However, it should be noted that the present invention can also be applied to representations of an examination region in other spaces, for example, representations of the examination region in frequency space or projection space. In this respect, the term "image" is to be interpreted broadly.

A "medical image" is a preferably visual representation of the human body or a part thereof or a visual representation of the body of an animal or a part thereof. Medical images can be used, e.g., for diagnostic and/or treatment purposes.

Techniques for generating medical images include X-ray radiography, computerized tomography, fluoroscopy, magnetic resonance imaging, ultrasonography, endoscopy, elastography, tactile imaging, thermography, microscopy, positron emission tomography, optical coherence tomography, fundus photography, and others.

Examples of medical images include CT (computer tomography) scans, X-ray images, MRI (magnetic resonance imaging) scans, PET (positron emission tomography) scans, fluorescein angiography images, OCT (optical coherence tomography) scans, histological images, ultrasound images, fundus images and/or others.

In an embodiment of the present disclosure, the medical image is a radiologic image. "Radiology" is the branch of medicine concerned with the application of electromagnetic radiation and mechanical waves (including, for example, ultrasound diagnostics) for diagnostic, therapeutic and/or scientific purposes. In addition to X-rays, other ionizing radiation such as gamma rays or electrons are also used. Since a primary purpose is imaging, other imaging procedures such as sonography and magnetic resonance imaging (MRI) are also included in radiology, although no ionizing radiation is used in these procedures. Thus, the term "radiology" as used in the present disclosure includes, in particular, the following examination procedures: computed tomography, magnetic resonance imaging, sonography, positron emission tomography.

The radiologic image may can a representation of an examination region generated with or without a contrast agent.

"Contrast agents" are substances or mixtures of substances that improve the depiction of structures and functions of the body in radiological examinations.

In computed tomography, iodine-containing solutions are usually used as contrast agents. In magnetic resonance imaging (MRI), superparamagnetic substances (for example iron oxide nanoparticles, superparamagnetic iron-platinum particles (SIPPs)) or paramagnetic substances (for example gadolinium chelates, manganese chelates, hafnium chelates) are usually used as contrast agents. In the case of sonography, liquids containing gas-filled microbubbles are usually administered intravenously. Examples of contrast agents can be found in the literature (see for example A.S.L. Jascinth et al.: Contrast Agents in computed tomography: A Review, Journal of Applied Dental and Medical Sciences, 2016, vol. 2, issue 2, 143-149; H. Lusic et al.: X-ray-Computed Tomography Contrast Agents, Chem. Rev. 2013, 113, 3, 1641-1666; https://www.radiology.wisc.edu/wp-content/uploads/2017/10/contrast-agents-tutorial.pdf, M.R. Nouh et al.: Radiographic and magnetic resonances contrast agents: Essentials and tips for safe practices, World J Radiol. 2017 Sep. 28; 9(9): 339-349; L.C. Abonyi et al.: Intravascular Contrast Media in Radiography: Historical Development & Review of Risk Factors for Adverse Reactions, South American Journal of Clinical Research, 2016, vol. 3, issue 1, 1-10; ACR Manual on Contrast Media, 2020, ISBN: 978-1-55903-012-0; A. Ignee et al.: Ultrasound contrast agents, Endosc Ultrasound. 2016 Nov-Dec; 5(6): 355-362).

In an embodiment of the present disclosure, the synthetic medical image is a synthetic MRI image. The synthetic MRI image may be generated based on one or more measured MRI images. The one or more measured MRI images may represent a liver or a portion of the liver at one or more time points before and/or after application of an MRI contrast agent. The synthetic MRI image may represent the liver or a portion of the liver at another time point before or after application of the MRI contrast agent. The MRI contrast agent may be or include a hepatobiliary contrast agent. A "hepatobiliary contrast agent" has the characteristic features of being specifically taken up by liver cells (hepatocytes), accumulating in the functional tissue (parenchyma) and enhancing contrast in healthy liver tissue. An example of a hepatobiliary MRI contrast agent is the disodium salt of gadoxetic acid (Gd-EOB-DTPA disodium), which is described in US Patent No. 6 039 931A and is commercially available under the trade names Primovist^{®} and Eovist^{®}. Further hepatobiliary contrast agents are described *inter alia* in WO2022/194777.

The one or more measured MRI images may represent the liver or a portion of the liver in one or more of the following phases before and/or after application of a hepatobiliary MRI contrast agent: native phase, arterial phase, portal venous phase, transitional phase, and/or hepatobiliary phase. The synthetic MRI image may represent the liver in a phase that is not represented by any of the measured MRI images. For example, the one or more measured MRI images may represent the liver or a portion of the liver in a native phase, arterial phase, portal venous phase, and/or transitional phase before and/or after application of a hepatobiliary MRI contrast agent, and the synthetic MRI image may represent the liver or a portion of the liver in a hepatobiliary phase after application of the hepatobiliary MRI contrast agent. For example, the one or more measured MRI images may represent the liver or a portion of the liver in an arterial phase, portal venous phase, transitional and/or hepatobiliary phase after application of a hepatobiliary MRI contrast agent, and the synthetic MRI image may represent the liver or a portion of the liver in a native phase before application of the hepatobiliary MRI contrast agent.

The phases mentioned above are described, for example, in: C. L. Hui et al.: Patterns of enhancement in the hepatobiliary phase of gadoxetic acid-enhanced MRI, Br J Radiol., 2020, 93: 20190989.

In another embodiment of the present disclosure, the synthetic medical image is a synthetic CT image.

In an embodiment of the present disclosure, the synthetic medical image is a synthetic PET image.

The synthetic medical image is generated with the help of a trained machine learning model.

Such a "machine learning model", as used herein, may be understood as a computer implemented data processing architecture. The machine learning model can receive input data and provide output data based on that input data and on parameters of the machine learning model (model parameters). The machine learning model can learn a relation between input data and output data through training. In training, parameters of the machine learning model may be adjusted in order to provide a desired output for a given input.

The process of training a machine learning model involves providing a machine learning algorithm (that is the learning algorithm) with training data to learn from. The term "trained machine learning model" refers to the model artifact that is created by the training process. The training data must contain the correct answer, which is referred to as the target. The learning algorithm finds patterns in the training data that map input data to the target, and it outputs a trained machine learning model that captures these patterns.

In the training process, input data are inputted into the machine learning model and the machine learning model generates an output. The output is compared with the (known) target. Parameters of the machine learning model are modified in order to reduce the deviations between the output and the (known) target to a (defined) minimum.

In general, a loss function can be used for training, where the loss function can quantify the deviations between the output and the target.

The aim of the training process can be to modify (adjust) parameters of the machine learning model in order to reduce the loss to a (defined) minimum.

The machine learning model of the present disclosure is or comprises a conditional generative model.

A "generative model" is a type of machine learning model that is designed to learn and generate new data that resembles the training data it was trained on. Generative models capture the underlying distribution of the training data and can generate samples from that distribution.

A "conditional generative model" is a type of generative model that generates data (in this case, synthetic medical images) given certain conditions or constraints. Conditional generative models take additional input in the form of a condition that guides the process of image generation. In general, this condition can be anything that provides some sort of context for the generation process, such as a class label, a text description, another image, or any other piece of information. In the case of the present disclosure, one or more image embeddings are used as the condition.

In an embodiment of the present disclosure, the conditional generative model is or comprises a diffusion model.

Diffusion models focus on modeling the step-by-step evolution of a data distribution from a "simple" starting point to a "more complex" distribution. The underlying concept of diffusion models is to transform a simple and easily sampleable distribution, typically a Gaussian distribution, into a more complex data distribution of interest. This transformation is achieved through a series of invertible operations. Once the model learns the transformation process, it can generate new samples by starting from a point in the simple distribution and gradually "diffusing" it to the desired complex data distribution.

A diffusion model usually comprises a noising model and a denoising model.

The noising model usually comprises a plurality of noising stages. The noising model is configured to receive input data (e.g., an image) and produce noisy data in response to receipt of the input data. The noising model introduces noise to the input data to obfuscate the input data after a number of stages, or "timesteps" *T.* The noising model can be or can include a finite number of steps *T* or an infinite number of steps (*T*→ ∞). The noising model may have the same weights/architectures for all timesteps or different weights/architectures for each timestep. The number of timesteps can be global (i.e., timesteps are the same for all pixels of an image) or local (e.g., each pixel in an image might have a different timestep).

The denoising model is configured to reconstruct the input data from the noisy data. The denoising model is configured to produce samples matching the input data after a number of stages.

For example, the diffusion model may include Markov chains at the noising model and/or denoising model. The diffusion models may be implemented in discrete time, e.g., where each layer corresponds to a timestep. The diffusion model may also be implemented in arbitrarily deep (e.g., continuous) time.

Diffusion models can be conceptually similar to a variational autoencoder (VAE) whose structure and loss function provides for efficient training of arbitrarily deep (e.g., infinitely deep) models. The diffusion model can be trained using variational inference, for example.

The diffusion model can be a Latent Diffusion Model (LDM). In such a model, the diffusion approach in the case of an image is not performed in real space (e.g., pixel space or voxel space or doxel space, as the case may be), but in so-called latent space based on a representation of the image, usually a compressed representation (see, e.g., R. Rombach et al.: High-Resolution Image Synthesis with Latent Diffusion Models, arXiv:2112.10752v2).

The diffusion model may be a Denoising Diffusion Probabilistic Model (DDPM). DDPMs are a class of generative models that work by iteratively adding noise to input data (e.g., an image or a compressed representation) and then learning to denoise from the noisy signal to generate new samples (see, e.g., J. Ho et al.: Denoising Diffusion Probabilistic Models, arXiv:2006.11239v2).

The diffusion model may be a Score-based Generative Model (SGM). In SGMs the data is perturbed with random Gaussian noise of various magnitudes. With the gradient of log probability density as score function, samples are generated towards decreasing noise levels and the model is trained by estimating the score functions for noisy data distribution (see, e.g., Y. Song et al.: Score-Based Generative Modeling through Stochastic Differential Equations, arXiv:2011.13456v2).

The diffusion model may be a Denoising Diffusion Implicit Model (DDIM) (see, e.g.: J. Song et al.: Denoising Diffusion Implicit Models, arXiv:2010.02502v4). A critical drawback of DDPMs is that they require many iterations to produce a high-quality sample. For DDPMs, this is because the generative process (from noise to data) approximates the reverse of the forward diffusion process (from data to noise), which could have thousands of steps; iterating over all the steps is required to produce a single sample. DDIMs are implicit probabilistic models that are closely related to DDPMs, in the sense that they are trained with the same objective function. DDIMs allow for much faster sampling while keeping an equivalent training objective. They do this by estimating the addition of multiple Markov chain steps and adding them all at once. DDIMs construct a class of non-Markovian diffusion processes which makes sampling from reverse process much faster. This modification in the forward process preserves the goal of DDPM and allows for deterministically encoding an image to the noise map.

Unlike DDPMs, DDIMs enable control over image synthesis owing to the latent space flexibility (attribute manipulation) (see, e.g., K. Preechakul et al.: Diffusion autoencoders: Toward a meaningful and decodable representation, arXiv:2111.15640v3). With DDIM, it is possible to run the generative process backward deterministically to obtain the noise map x*_{T}*, which represents the latent variable or encoding of a given image x₀. In this context, DDIM can be thought of as an image decoder that decodes the latent code x*_{T}* back to the input image. This process can yield a very accurate reconstruction; however, x*_{T}* still does not contain high-level semantics as would be expected from a meaningful representation.

In an embodiment of the present disclosure, the conditional generative model is or comprises a conditional diffusion model.

In a conditional diffusion model, a condition is used to denoise latent data and reconstruct the input data (see, e.g., P. Dhariwal, A. Nichol: *"Diffusion models beat GANs on image synthesis,"* arXiv:2105.05233v4). One benefit of conditioning the diffusion model with information-rich representations is a more efficient denoising process.

In general, such a condition can be based on a text (e.g., text-to-image), on an image, on audio data, or on other information. In the case of the present disclosure, an image embedding of a medical image is used as a condition for the generation of a synthetic medical image.

The conditional generative model is first trained using training data. The training data is generated based on a plurality of data sets from a plurality of examination objects.

The term "plurality" means more than ten, preferably more than a hundred.

Each data set comprises at least two medical images, a first medical image and a second medical image. The first medical image represents an examination region of an examination object at a first point in time. The second medical image represents the examination region of the examination object at a second point in time. The first point in time and the second point in time are different points in time.

The examination region is usually the same for each data set. The examination object can be a different examination object for each data set; however, it is also possible that the medical images of one or more data sets represent the examination region of the same examination object.

The second point in time can be after the first point in time; however, the second point in time can also be before the second point in time.

The first time point and/or the second time point (and/or any other time point disclosed in this disclosure) are preferably time points that are at a defined time interval from a defined event. The defined event may be a part of and/or related to the dynamic examination of the examination region of the examination object. The event can, for example, be the start of the dynamic examination. The first and/or the second time point (and/or any other time point disclosed in the present disclosure) may be within a defined time interval after the start of the dynamic examination, e.g. a certain number of seconds or minutes after the start of the dynamic examination. The event may be, for example, the application of a contrast agent. The first and/or the second time point (and/or any other time point disclosed in this disclosure) may be within a defined time interval from the application of the contrast agent, e.g., a defined number of seconds or minutes before or after the application of the contrast agent.

The second medical image serves as input data and target data. In other words, the conditional generative model is configured to reconstruct the second medical image. The reconstructed second medical image is a synthetic medical image.

An image embedding of the first medical image serves as a condition for the reconstruction of the second medical image.

In other words, the conditional generative model is configured and trained to generate a reconstructed second medical image representing an examination region of an examination object at a second point in time based on an image embedding of a first medical image representing the examination region of the examination object at first point in time as a condition. Generating a reconstructed second medical image usually comprises: inputting the second medical image and the image embedding of the first medical image into the conditional generative model, and reconstructing the synthetic medical image using the image embedding of the first medical image as a condition.

It is also possible that the conditional generative model is configured and trained to generate a reconstructed second medical image based on multiple first medical images, e.g., two or three or four or five or six or seven or more than seven first medical images.

For example, it is possible that the conditional input comprises one or more image embeddings of two or more (e.g., three, four, five, six, seven or more) first medical images representing an examination region of an examination object at a first time point, and that the target data comprises a second medical image representing the examination region of the examination object at a second time point. In other words, the conditional generative model may be configured and trained to generate a reconstructed second medical image based on one or more image embeddings of multiple first medical images as condition.

The multiple medical images can, for example, be medical images of different modalities and/or they may have been generated under different measurement conditions.

The term "modality" refers to the specific imaging technique or method used to generate medical images. Common modalities include X-ray, computed tomography (CT), magnetic resonance imaging (MRI), ultrasound, positron emission tomography (PET), and single-photon emission computed tomography (SPECT). Each modality offers unique advantages and is used to visualize different aspects of the body, such as bones, soft tissues, blood flow, or metabolic activity.

The different measurement conditions can, for example, relate to energies, measurement sequences, contrast media and/or the like.

In the case of MRI, the medical images generated under different measurement conditions can be, for example, T1-weighted images, T2-weighted images, proton density images, diffusion weighted images, images with and/or without contrast agent, images with different contrast agents and/or other/additional images.

In the case of computed tomography, the medical images generated under different measurement conditions can, for example, be CT scans generated under different photon energies of X-rays, CT scans with and/or without contrast agent, CT scans with different contrast agents and/or other/additional images.

It is also possible that the conditional input comprises one or more image embeddings of multiple medical images that represent an examination region of an examination object at different points in time.

For example, it is possible that the conditional generative model is configured and trained to generate a reconstructed third medical image based on one or more image embeddings of one or more first medical images and one or more second medical images, wherein the one or more first medical images represent the examination region of the examination subject at a first time point, the one or more second medical images represents the examination region of the examination subject at a second time point, and the reconstructed third medical image represents the examination region of the examination subject at a third time point, wherein the first time point, the second time point and the third time point are different time points.

The three points in time t₁, t₂ and t₃ can form any of the following time sequences: t₁→t₂→t₃, t₂→t₃→t₁, t₃→t₁→t₂, t₁→t₃→t₂, t₂→t₁→t₃, t₃→t₂→t₁. The sequence t₁→t₂→t₃ means that the second point in time follows the first point in time and the third point in time follows the second point in time. The intervals between consecutive points in time can be the same or different.

For example, it is possible that the conditional generative model is configured and trained to generate a reconstructed fourth medical image based on one or more image embeddings of one or more first medical images, one or more second medical images and one or more third medical images, wherein the one or more first medical images represent the examination region of the examination object at a first time point, the one or more second medical images represent the examination region of the examination object at a second time point, the one or more third medical images represent the examination region of the examination object at a third time point, and the reconstructed fourth medical image represents the examination region of the examination object at a fourth time point, wherein the first time point, the second time point, the third time point, and the fourth point in time are different time points.

The four points in time t₁, t₂, t₃ and t₄ can form any of the following time sequences: tⱼ→tₖ→tₗ→tₘ, wherein j, k, l and m can be the numbers 1, 2, 3 or 4, where j ≠ k ≠ l ≠ m. The sequence tⱼ→tₖ→tₗ→tₘ means that the time point tₖ follows the time point tⱼ and the time point tₗ follows the time point tₖ and the time point tₘ follows the time point tₗ. The intervals between consecutive points in time can be the same or different.

In general, the conditional generative model is configured and trained to generate a reconstructed medical image based on one or more image embeddings of a number p of medical images, wherein the medical images represent an examination region of an examination object at q different points in time, and the reconstructed medical image represents the examination region of the examination object at a point in time which is different from the q points in time, wherein p and q are integers greater than or equal to 1, and p ≥ q.

Preferably, p is 1, 2, 3, 4, 5, 6, 7, 8, 9 or 10, q is 1, 2, 3, 4, 5, 6, 7, 8, 9 or 10, and p ≥ q.

In an embodiment of the present disclosure, the conditional generative model is configured and trained to generate a reconstructed medical image based on one or more image embeddings of a number of p medical images, wherein the p medical images represent an examination region of an examination object at p different time points and the reconstructed medical image represents the examination region of the examination object at a time point different from the p different time points, wherein p is 1, 2, 3, 4, 5, 6, 7, 8, 9 or 10.

The medical images from which one or more image embeddings are used as conditional input may represent an examination region of an examination object, for example, at one or more time points before and/or after the application of a contrast agent, while the reconstructed medical image represents the examination region of the examination object at another time point before and/or after the application of the contrast agent.

In an embodiment of the present disclosure, the conditional generative model is configured and trained to generate a reconstructed MRI image based on one or more image embeddings of a number p of MRI images, wherein each MRI image of the number p of MRI images represents a liver or a portion of the liver of an examination object in one or more phases before or after the application of a hepatobiliary contrast agent, and the reconstructed MRI image represents the liver or the portion of the liver of the examination object in another phase before or after the application of the hepatobiliary contrast agent, wherein p is 1, 2, 3, 4, 5, 6, 7, 8, 9 or 10.

The phases may be or comprise a native phase, arterial phase, portal venous phase, transitional phase, and/or hepatobiliary phase.

For example, the one or more MRI images of the number p of MRI images may represent the liver or the portion of the liver of the examination object in the native phase (i.e., without contrast agent), arterial phase, portal venous phase, and/or transitional phase, and the reconstructed medical image may represent the liver or the portion of the liver of the examination object in the hepatobiliary phase.

For example, the one or more MRI images of the number p of MRI images may represent the liver or the portion of the liver of the examination object in the arterial phase, portal venous phase, transitional phase, and/or hepatobiliary phase and the reconstructed medical image may represent the liver or the portion of the liver of the examination object in the native phase (i.e., without contrast agent).

As described, one or more image embeddings of the at least one first medical image serve as a condition for the reconstruction of the second medical image. Therefore, an image embedding is generated from each first medical image.

An "image embedding" is a numerical representation of an image that captures the salient features of the image.

An image embedding usually captures the meaning or semantics of the medical image. It aims to encode the high-level information and concepts present in the medical image, allowing machines to understand and reason about the content of the medical image. For example, information about morphologies, colours, structures and/or relationships between structures contained in the medical image can be agglomerated in an image embedding of the medical image.

The image embedding can be a vector or a matrix or a tensor or another arrangement of numbers.

An image embedding can be obtained, for example, by passing the medical image through a pre-trained machine learning model and then extracting the output of one layer of the machine learning model.

The machine learning model for generating image embeddings can be or comprise a (pre-trained) convolutional neural network, for example.

Convolutional neural networks (CNNs) are frequently used for generating image embeddings. These artificial neural networks consist of multiple layers that progressively extract features at different levels of abstraction, capturing both low-level details and higher-level semantic concepts. The CNN can be part of a classifier or autoencoder, for example.

In an embodiment of the present disclosure, the image embeddings are generated with an encoder of an optionally pre-trained autoencoder.

An "autoencoder" is a type of neural network architecture that is primarily used for unsupervised learning and dimensionality reduction. It may be designed to learn a compressed representation of the input data and then reconstruct the original data from this compressed representation (the embedding). An autoencoder usually comprises two main components: an encoder and a decoder. The encoder takes the input data and maps it to a lower-dimensional latent space representation, also known as the embedding. The decoder then takes this embedding and reconstructs the original input data from it. The objective of an autoencoder is to minimize the reconstruction error, which encourages the model to learn a compressed representation that captures the most salient features of the input data.

An autoencoder is often implemented as an artificial neural network that comprises a convolutional neural network (CNN) to extract features from medical images as input data. An example of such an autoencoder is the U-Net (see, e.g., O. Ronneberger et al.: U-net: Convolutional networks for biomedical image segmentation, International Conference on Medical image computing and computer-assisted intervention, 234-241, Springer, 2015, DOI: 10.1007/978-3-319-24574-4_28). Further examples of autoencoders are sparse autoencoders, denoising autoencoders, variational autoencoders (VAEs), and generative adversarial networks (GANs). The autoencoder can be (pre-)trained based on (non-annotated) images. The images used for pre-training can be medical images, but they can also be other images or include other images.

Autoencoders can be (pre-)trained using a self-supervised learning approach, meaning they do not require labeled data for training.

The term "pre-trained" refers to a model that has been trained on a large dataset in advance and is made available for use by others. Pre-training involves training a model on a task or dataset that is typically different from the specific task for which the model will be used later. The pre-training process involves exposing the model to a vast amount of data and allowing it to learn general patterns and representations from that data. This enables the model to capture common features and structures that are useful across various related tasks. The model is typically trained using unsupervised or self-supervised learning methods, where the labels or annotations are generated automatically or do not require human intervention. Once the pre-training phase is complete, the model's weights and parameters can be saved and made publicly available. Other researchers or practitioners can then use this pre-trained model as a starting point for their own tasks. By leveraging the pre-trained model, they can benefit from the learned representations and potentially achieve better performance even with limited training data.

In another embodiment of the present disclosure, the image embeddings are generated with the help of a pre-trained vision transformer.

Transformers are widely used for various natural language processing tasks, including machine translation, text summarization, sentiment analysis, and more.

At the core of the transformer model is the transformer architecture, which relies heavily on self-attention mechanisms to process sequential data efficiently. Unlike traditional recurrent neural networks (RNNs) or convolutional neural networks (CNNs), transformers do not employ recurrent or convolutional operations. Instead, they use self-attention mechanisms to capture contextual relationships between words or tokens in a sequence. This enables transformers to model long-range dependencies effectively, allowing them to produce more accurate predictions.

The transformer architecture consists of two main components: the encoder and the decoder. The encoder processes the input sequence, modeling its contextual relationships, while the decoder generates the output sequence based on the encoded information. Both the encoder and decoder are composed of multiple layers of self-attention mechanisms and feed-forward neural networks. The self-attention mechanism allows the model to focus on different parts of the input sequence while considering the dependencies between tokens.

Transformers have significantly contributed to advancements in machine learning, particularly in natural language processing tasks. Their ability to capture contextual information efficiently has resulted in state-of-the-art performance on various benchmarks and has paved the way for numerous applications in the field (see, e.g., T. Lin et al.: A survey of transformers, AI Open, Volume 3, 2022, Pages 111-132).

Transformers have been applied to images (vision transformer).

In a vision transformer, the input image is divided into a sequence of patches, which are then flattened and fed into a series of transformer layers. These transformer layers consist of self-attention modules and feed-forward neural networks. The self-attention mechanism allows the model to capture the relationships between different patches and learn global context information, while the feed-forward networks enable non-linear transformations (see, e.g., S. Khan et al.: Transformers in Vision: A Survey, arXiv:2101.01169v5).

The key advantage of vision transformers is their ability to model long-range dependencies and capture global context, which is crucial for understanding complex visual patterns and relationships.

Like the autoencoder, the vision transformer is preferably pre-trained. The vision transformer may have been pre-trained in a supervised, self-supervised or unsupervised approach.

The vision transformer may have been pre-trained in a DINO approach. DINO (self-DIstillation with NO labels) is a self-supervised learning method specifically designed to improve the performance of vision transformers in image classification tasks (see, e.g., M. Caron et al.: Emerging Properties in Self-Supervised Vision Transformers, arXiv:2104.14294v2).

"Self-supervised learning" is a type of machine learning paradigm where a model is trained to learn from the data itself, without the need for human-labeled annotations. Instead of relying on external labels

provided by humans, the model generates its own supervisory signals from the input data, making it a form of unsupervised learning.

In traditional self-supervised learning, a model is trained on a pretext task, where the labels are generated from the input data itself without requiring human annotations. The model learns to predict certain properties or relationships within the data, which in turn helps it to learn meaningful representations. These representations can then be transferred to downstream tasks.

DINO introduces a novel approach to self-supervised learning for vision transformers by leveraging two main components: clustering and distillation. Initially, the model is trained to cluster the augmented views of the input data. This clustering helps the model to discover semantically similar instances within the dataset. Then, a distillation process is performed, where the model learns to transfer knowledge from a teacher network to a student network. The teacher network provides soft targets, or guidance, to the student network, which helps improve the student's performance. By combining clustering and distillation, DINO enables the model to learn more robust and discriminative representations, leading to better generalization and performance on downstream tasks such as image classification.

In another embodiment of the present disclosure, the vision transformer is pre-trained using a DiNOv2 approach. DiNOv2 (DIscriminative NOise Contrastive Learning V2) is another self-supervised approach for training vision transformers (see, e.g., M. Oquab et al.: DINOv2: Learning Robust Visual Features without Supervision, arXiv:2304.07193v1).

In another embodiment of the present disclosure, the image embeddings are embeddings generated with the help of an image encoder of a pre-trained CLIP model.

CLIP (Contrastive Language-Image Pretraining) is a framework in the field of machine learning that combines natural language processing and computer vision to understand and generate multimodal representations of images and text. CLIP encodes text and image in same embedding space (see, e.g., A. Radford et al.: Learning Transferable Visual Models From Natural Language Supervision, arXiv:2103.00020v1).

CLIP is (pre-)trained in a self-supervised manner, where large-scale datasets of images and their associated text are used to learn joint representations. The model is trained to associate images and their textual descriptions by maximizing their similarity in the learned embedding space. This allows CLIP to understand and reason about images and text in a shared semantic space. The base model uses a ViT-L/14 transformer architecture as an image encoder and uses a masked self-attention transformer as a text encoder. These encoders are trained to maximize the similarity of (image, text) pairs via a contrastive loss.

The key innovation of CLIP is its ability to generalize across different domains and tasks. By training on a diverse range of image and text pairs, CLIP can perform a variety of tasks without task-specific fine-tuning. For example, CLIP can perform zero-shot image classification, where it can classify images into categories it has never seen during training, solely based on textual descriptions.

In a preferred embodiment, the image encoder of a pre-trained CLIP model is used which was pre-trained on medical images, such as BiomedCLIP (see, e.g., S. Zhang et al.: Large-Scale Domain-Specific Pretraining for Biomedical Vision-Language Processing, arXiv:2303.00915v1).

However, the models and training procedures listed here are only examples; the image embeddings can also be generated in other ways.

It is also possible to generate more than one image embedding of a medical image (e.g., two, or three or four or any other number).

It is possible to generate different image embeddings from a medical image (e.g. using different embedding methods).

If multiple image embeddings are available, these can be combined into a single image embedding, e.g. through concatenation, average pooling, attention-weighted pooling and/or other combination methods.

Image embeddings can be generated before training the conditional generative model and then saved. Image embeddings can also be generated during training of the conditional generative model.

Generating an image embedding of a medical image usually comprises: inputting the medical image into an image encoder, and receiving the image embedding of the medical image as an output of the image encoder.

Training the conditional generative model usually involves the following steps:
For each data set:
   - inputting the second medical image and the image embedding of the first medical image into the conditional generative model, wherein the image embedding of the first medical image is used as a condition in the generation of the reconstructed second medical image,
   - receiving a reconstructed second medical image as an output of the conditional generative model,
   - determining a deviation between the second medical image and the reconstructed second medical image, e.g. by means of a loss function,
   - reducing the deviation by modifying model parameters of the conditional generative model.
The training of the conditional generative model can be ended when a stop criterion is met. Such a stop criterion can be for example: a predefined maximum number of training steps/cycles/epochs has been performed, deviations between output data and target data can no longer be reduced by modifying the model parameters, a predefined minimum of the loss function is reached, and/or an extreme value (e.g., maximum or minimum) of another performance value is reached.

The trained conditional generative model can be saved, transferred to a separate computer system and/or used to generate a synthetic medical image.

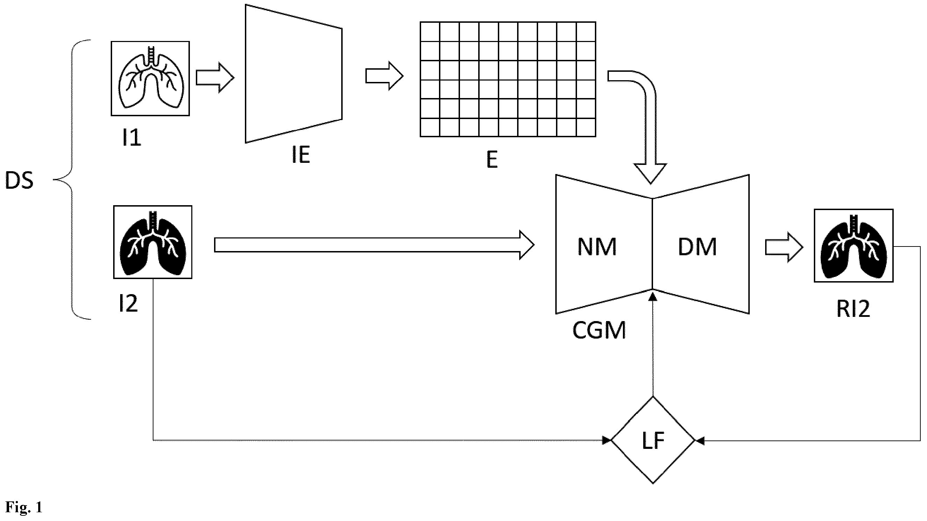

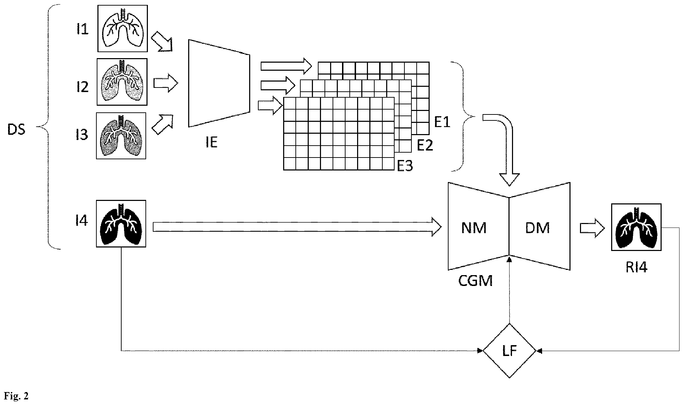

The training is shown schematically in Fig. 1 and Fig. 2 in the form of examples.

Fig. 1 shows schematically an embodiment of the training of the conditional generative model.

In a first step, a plurality of data sets is received. For the sake of clarity, only one data set DS is shown in Fig. 1.

Each data set DS represents the examination region of an examination object.

In the example shown in Fig. 1, the examination object is a human being and the examination region comprises the human lung.

It should be noted that in Figures 1 to 11, the human lung was chosen as an example of an examination region of an examination object. The depicted human lung is just a representation of any part of any examination object. In other words, the human lung shown in Figures 1 to 11 can also be another part of an examination object, e.g. a liver, kidney, heart, lung, brain, stomach, bladder, prostate, intestine, thyroid, eye, breast or a part of said parts or another part of the body of a mammal (for example a human).

Each data set DS comprises at least two medical images, a first medical image I1 and a second medical image I2.

The first medical image I1 represents the examination region of the examination object at a first point in time. The second medical image I2 represents the examination region of the examination object at a second point in time. The first point in time and the second point in time are different points in time.

The first medical image I1 is inputted to an image encoder IE. The image encoder IE generates an image embedding E based on the first medical image I1.

The second medical image I2 and the image embedding E are inputted to the conditional generative model CGM. The conditional generative model CGM is configured and trained to generate a reconstructed second medical image RI2 based on the second medical image I2 and the image embedding E of the first medical image I1. The image embedding E of the first medical image I1 is used as a condition for generating the reconstructed second medical image R12.

The conditional generative model CGM comprises a noising model NM and a denoising model DM.

The noising model NM is configured to receive input data (i.e., the second medical image I2) and produce noisy data in response to receipt of the input data. The noising model introduces noise to the input data to obfuscate the input data after a number of stages.

The denoising model DM is configured to reconstruct the input data (i.e., the second medical image 2) from the noisy data. The denoising model DM is configured to produce samples matching the input data after a number of stages.

It should be noted that the diffusion approach can be performed in real space (e.g., pixel space or voxel space or doxel space, as the case may be) or in latent space.

A loss function LF is used to quantify deviations between the second medical image I2 and the reconstructed second medical image RI2.

The deviations can be reduced by modifying model parameters of the conditional generative model CGM.

The process shown in Fig. 1 is carried out for a plurality of data sets until a stop criterion is reached.

If image embeddings are used as conditions in the reconstruction of a medical image, it is possible to mask part of the image embeddings. By masking, the conditional generative model is forced to compensate for the missing information. It learns to extract global information from local information.

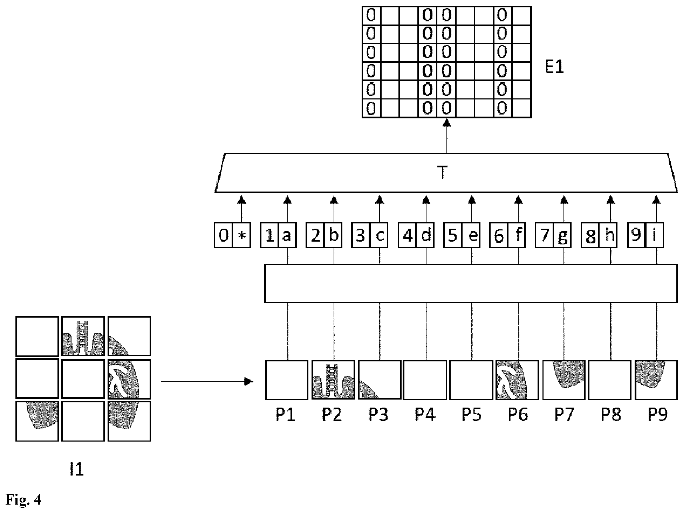

The parts that are masked can be selected randomly or specifically. The proportion of masked parts can be constant or can be varied. Examples of masking are shown in Figures 4, 6, 7, and 8.

Fig. 2 shows schematically another embodiment of the training of the conditional generative model.

The training shown in Fig. 2 differs from the training shown in Fig. 1 in that image embeddings of several images are used as conditions for reconstruction.

In a first step, a plurality of data sets is received. For the sake of clarity, only one data set DS is shown in Fig. 2.

Each data set DS represents the examination region of an examination object.

In the example shown in Fig. 2, the examination object is a human being and the examination region comprises the lung of the human being.

The data set DS comprises four medical images, a first medical image I1, a second medical image I2, a third medical image I3, and a fourth medical image I4.

The fourth medical image I4 is the image which is reconstructed.

The first medical image I1, the second medical image I2 and the third medical image I3 differ from the fourth medical image I4 in the time at which they represent the examination region.

It is possible that the first medical image I1, the second medical image I2, the third medical image I3 and the fourth medical image I4 represent the examination region at different points in time. However, it is also possible that two or three of the first, second and third medical images represent the examination region at the same point in time, but in the form of a different modality and/or under different measurement conditions.

Preferably, the first medical image I1, the second medical image I2, the third medical image I3 and the fourth medical image I4 represent the examination region at different points in time.

An image embedding is generated from each of the three medical images I1, I2 and I3 using the image encoder IE. A first image embedding E1 is generated from the first medical image I1; a second image embedding E2 is generated from the second medical image I2; a third image embedding E3 is generated from the third medical image I3.

The medical image I4 is fed to the conditional generative model CGM. The conditional generative model CGM generates a reconstructed medical image RI4. The embeddings E1, E2 and E3 are used as conditions when generating the reconstructed medical image RI4.

The image embeddings E1, E2 and E3 can be combined into one embedding. This is generally the case and does not only apply to the training shown in Fig. 2: if several image embeddings are available as conditions for reconstruction, they can be combined into one embedding, the combined image embedding.

There are several options to combine multiple image embeddings into one embedding.

Multiple image embeddings can be combined into one embedding by concatenation, i.e., by sticking the image embeddings end-to-end. If the image embeddings are vectors, a longer vector or a matrix can be created by concatenation. If the image embeddings are matrices, a matrix with more rows or columns or a tensor can be created by concatenation. This method (concatenation) retains all original information but may result in a high-dimensional conditional input.

Multiple image embeddings can be combined into one embedding by summation, i.e., by summing the image embeddings together elementwise.

Multiple image embeddings can be combined into one embedding by performing a principal component analysis (PCA), and generating an embedding based on identified principle components.

Multiple image embeddings can be combined into one embedding by averaging, i.e., by taking the element-wise mean (e.g., arithmetic means) of the image embeddings.

Multiple image embeddings can be combined into one embedding by weighted averaging. Weighted averaging is similar to averaging but each image embedding and/or each dimension of an image embedding is assigned a weight before averaging. The weights can be determined based on the importance of each image embedding and/or dimension, for example. The weights can be learned, for example. It is possible that the image encoder or a downstream artificial neural network that combines the image embeddings is included in the training of the conditional generative model and that the attention weights are learned during the training.

It is possible that the image encoder is or comprises a CNN and that the parameters of the CNN are learned during the training of the conditional generative model. For example, the CNN can perform a 1D convolution over the elements of the image embeddings and thus merge the image embeddings into a single embedding.

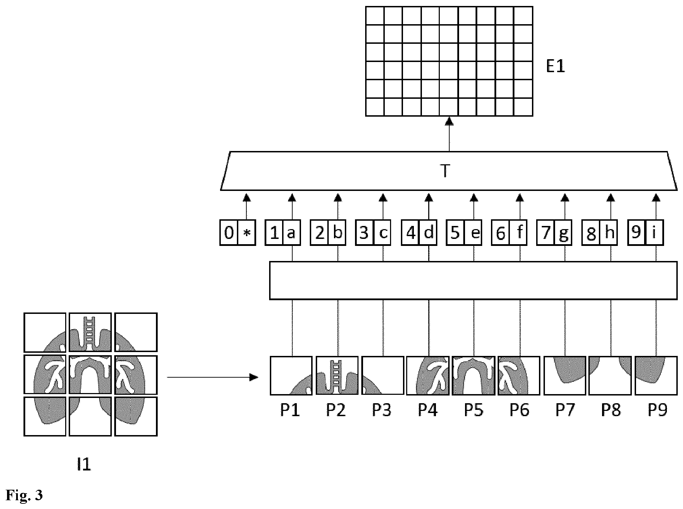

Figs. 3 to 8 show schematic examples of the generation of image embeddings that can be used as conditions for the reconstruction of a medical image. In the examples shown, the image encoder is based on a vision transformer. It should be noted that the image encoder of the present disclosure is not limited to vision transformer.

Fig. 3 shows a schematic example of how an image embedding is generated from a medical image.

The medical image I1 is split into fixed-size patches P1 to P9. Patch embeddings *a* to *i* are generated by flattening the patches P1 to P9 and mapping the flattened patches by linear projection to a dimension corresponding to the input dimension of the transformer T. Position embeddings 1 to 9 are added to the patch embeddings to retain positional information. The resulting sequence serves as input to the transformer T.

In the example shown, the sequence is preceded by an embedding * with the position 0, which can contain global information about the medical image I1, e.g. at what time and/or in which phase of an examination it was generated and/or which examination region it shows and/or the modality of the medical image and/or the measurement conditions under which it was generated.

It is possible that other/further embeddings are added to the sequence. For example, one or more learnable input tokens can be added, that the conditional generative model can use as "registers" (see, e.g., T. Darcet et al.: Vision Transformers Need Registers, arXiv:2309.16588v1).

The transformer T generates an image embedding E1 from the sequence.

This process for generating image embeddings is known and described, for example, in: A. Dosovitsky et al.: An Image is Worth 16x16 Words: Transformers for Image Recognition at Scale, arXiv:2010.11929v2).

Fig. 4 shows a schematic example of how parts of an image embedding can be masked. In the example shown, the patches P1, P3, P4 and P8 are masked. The grey values of the masked patches can be set to zero, for example. This also sets the corresponding image tokens of the image embedding E1A to zero. However, masking does not have to be performed at patch level; it is also possible to perform masking at image token level.

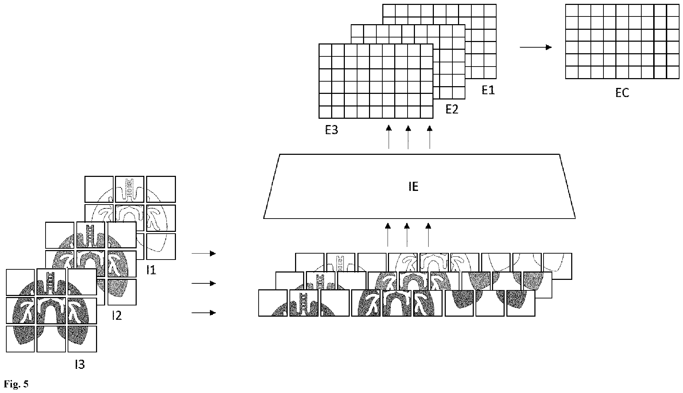

Fig. 5 shows a schematic example of the generation of several image embeddings and the combination of the image embeddings into a single image embedding.

Fig. 5 shows three medical images I1, I2, and I3. These may be the three medical images I1, I2, and I3 shown in Fig. 2 and described in relation to Fig. 2 above.

Patches are generated from each of the three images and fed to the image encoder IE. The image encoder IE generates a first image embedding E1 based on the patches of the first medical image I1, a second image embedding E2 based on the patches of the second medical image and a third image embedding E3 based on the third medical image I3. The image embeddings can be generated as described in relation to Fig. 4.

The image embeddings E1, E2 and E3 are combined into a single image embedding EC. This combined image embedding EC can be used as a condition when reconstructing a medical image (e.g., when generating the reconstructed medical image RI4 in Fig. 2).

The image embeddings E1, E2 and E3 can be combined into the single image embedding EC in various ways, e.g., by concatenation, by summing the image embeddings together elementwise, by performing a principal component analysis (PCA) and generating an embedding based on principle components, by taking the element-wise mean (e.g., arithmetic means) of the image embeddings, by taking the element-wise maximum (e.g., arithmetic means) of the image embeddings, by weighted averaging, and/or by using a trainable machine learning model (such as an artificial neural network).

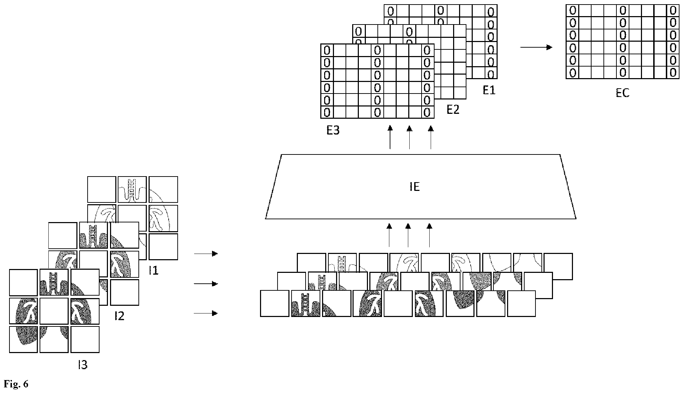

Patches and/or image tokens can also be masked in the case of multiple image embeddings. Fig. 6 shows an example of masking patches and/or image tokens. As shown in Fig. 6, for example, patches representing the same sub-regions of the examination region can be masked randomly or according to defined rules. When combining the image embeddings E1, E2 and E3 to form the combined image embedding EC by means of summation, average pooling or max pooling, the corresponding image tokens of the combined image embedding EC would also assume the value zero.

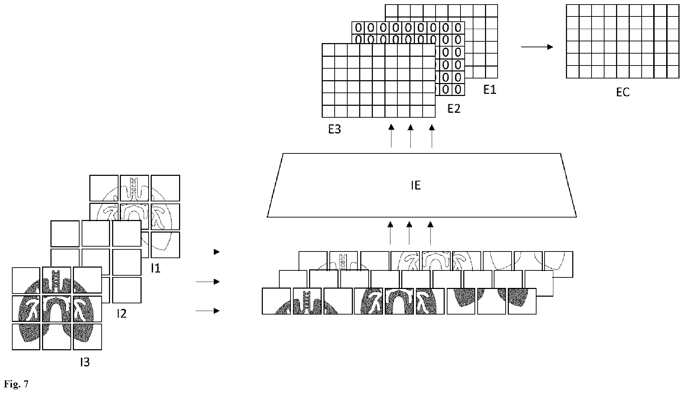

Fig. 7 shows another example of masking patches and/or image tokens. In the example shown in Fig. 7, individual medical images are masked, in this case medical image I2. If a medical image represents a phase in a dynamic examination, information about this phase is missing when reconstructing a medical image. The conditional generative model is forced to compensate for the missing information from images representing other phases. This would make the conditional generative model invariant to the number of phases and the phases it receives during inference. This also applies analogously to all other different characteristics that can be represented by the medical images (e.g. modalities and/or measurement conditions).

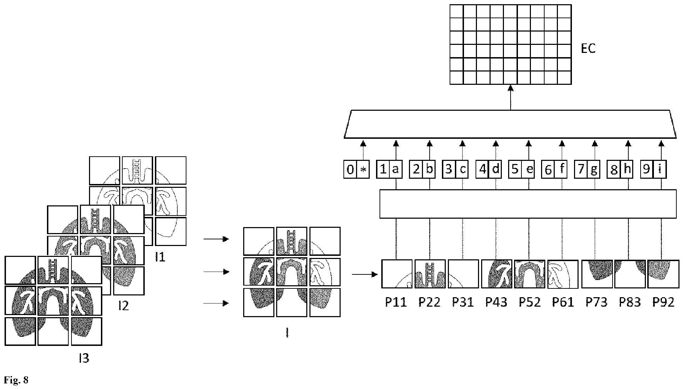

Fig. 8 shows another example of generating an image embedding based on multiple medical images. In the example shown in Fig. 8, the medical images I1, I2 and I3 are divided into patches. Thereby, three sets of patches are generated. A defined portion of each set is used to create the image embedding EC so that each sub-region of the examination region is represented once by a patch. In other words, a new image I is generated from the patches of images I1, I2, and 13, which is composed of patches of the images I1, I2, and I3 in such a way that each sub-region of the examination region is represented once by a patch. In this example, the new image I is composed of the patches P11, P22, P31, P43, P52, P61, P73, P83 and P92, whereby the first digit indicates the position of the patch, and the second digit indicates the number of the image from which it originates.

The proportion of patches per medical image and/or which patches from which medical image are used to generate the new image I can vary in each training cycle.

As with the approach in Fig. 7, the approach in Fig. 8 also results in the conditional generative model becoming invariant to the phases/modalities and the number of phases/modalities.

As described, the trained conditional generative model can be used to generate a synthetic medical image.

The use of a trained model is also referred to as inference.

In a first step, at least one medical image of a new examination object is received.

The term "new" means that usually no data from the new examination object was used to train the conditional generative model. However, it is possible that data from the new examination object was used to train the conditional generative model. The new examination object is usually of the same type as the examination objects that represent the training data. For example, if the conditional generative model was trained with training data representing humans, the new examination object is usually also a human.

The term "receiving" includes both retrieving one or more medical images and receiving one or more medical images that are transmitted, for example, to the computer system of the present disclosure. The one or more medical images may be received from an MRI scanner, a CT scanner or any other device for the generation of medical images, as the case may be. The one or more medical images may be read from one or more data storage devices.

The at least one medical image represents the examination region of the new examination object at the first time point.

Based on the at least one medical image at least one image embedding is generated using the image encoder.

Based on the at least one image embedding as a condition, a synthetic medical image is generated using the conditional generative model.

For example, if the trained conditional generative model is a conditional diffusion model with a noising model and a denoising model, the noising model can be discarded, and a noisy data can be entered into the denoising model. The denoising model then generates the synthetic medical image step by step from the noisy data using the at least one image embedding as a condition.

The synthetic medical image represents the examination region of the new examination object at the second point in time. The second point and the first point in time correspond to the respective points in time of the training data.

The synthetic medical image can be outputted (e.g., displayed on a monitor or printed using a printing device) and/or stored in a data storage and/or transmitted to a separate computer system.

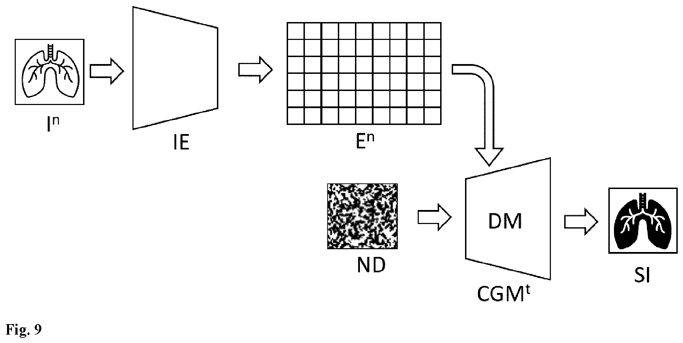

Figs. 9 to 11 show schematically and by way of example the generation of a synthetic medical image.

Fig. 9 shows an embodiment for generating a synthetic medical image based on a medical image.

A trained conditional generative model CGM^{t} is used to generate the synthetic medical image SI. The trained conditional generative model CGM^{t} may have been trained as described in relation to Fig. 1.

A medical image Iⁿ of a new examination object is received. The medical image Iⁿ represents the examination region of the new examination object at the first point in time of a dynamic examination. The medical image Iⁿ is fed to the image encoder IE. The image encoder IE generates an image embedding Eⁿ based on the medical image Iⁿ. Noisy data ND is provided. The noisy data ND is fed to the denoising model DM of the trained conditional genetic model CGM^{t}. Similarly, the image embedding Eⁿ is fed into the trained conditional generative model CGM^{t}. The trained conditional generative model CGM^{t} generates the synthetic medical image SI based on the noisy data and based on the image embedding Eⁿ as a condition. The synthetic medical image SI represents the examination region of the new examination object at the second time point. The first time point and the second time point are different time points. The first time point and the second time point correspond to the respective points in time of the training data.

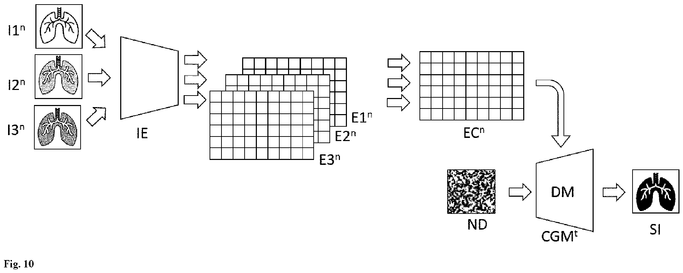

Fig. 10 shows an embodiment for generating a synthetic medical image based on several medical images.

A trained conditional generative model CGM^{t} is used to generate the synthetic medical image SI. The trained conditional generative model CGM^{t} may have been trained as described in relation to Fig. 2.

In the example shown in Fig. 10, three medical images of a new examination object are received, a first medical image I1ⁿ, a second medical image I2ⁿ, and a third medical image I2ⁿ.

It is possible that the first medical image I1ⁿ, the second medical image I2ⁿ, and the third medical image I3ⁿ represent the examination region of the new examination object at different points in time. However, it is also possible that one or more medical images represent the examination region at the same point in time, but in the form of a different modality and/or under different measurement conditions.

Preferably, the first medical image I1ⁿ, the second medical image I2ⁿ, and the third medical image I3ⁿ represent the examination region at different points in time.

An image embedding is generated from each medical image using the image encoder IE. A first image embedding E1ⁿ is generated based on the first medical image I1ⁿ, a second image embedding E2ⁿ is generated based on the second medical image I2ⁿ, and a third image embedding E3ⁿ is generated based on the third medical image I3ⁿ.

The image embeddings E1ⁿ, E2ⁿ, and E3ⁿ are combined into a combined image embedding ECⁿ. Combining is preferably carried out in the same way as when training the conditional generative model and as described in relation to Figures 2 and 5.

The combined image embedding ECⁿ is used as condition for generating the synthetic medical image SI.

Noisy data ND is provided. The noise data ND is fed to the denoising model DM of the trained conditional genetic model CGM^{t}. Similarly, the combined image embedding ECⁿ is fed into the trained conditional generative model CGM^{t}. The trained conditional generative model CGM^{t} generates the synthetic medical image SI based on the noisy data and based on the combined image embedding ECⁿ. The synthetic medical image SI represents the examination region of the new examination object at a point in time that is different from the points in time at which the medical images I1ⁿ, I2ⁿ and I3ⁿ represent the examination region.

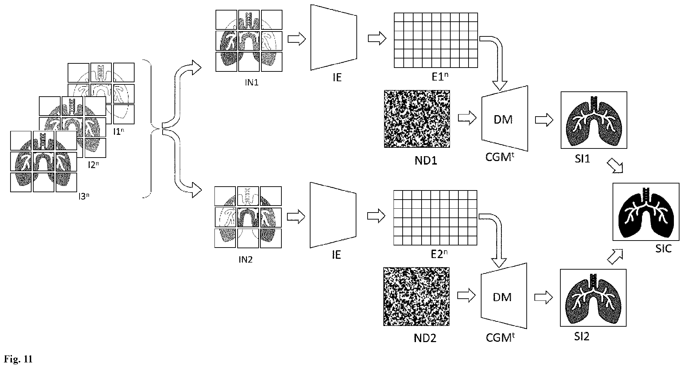

If there were different ways to combine multiple image embeddings into a combined image embedding during training of the conditional generative model, multiple combined image embeddings can be generated during inference, and a different synthetic medical image can be generated based on each combined image embedding. The different synthetic medical images generated in this manner may be combined into a single synthetic medical image, e.g., by element-wise averaging or other method. This also applies analogously to the case shown in Fig. 8, in which a new medical image I is generated based on the medical images I1, I2, and I3. This is shown schematically as an example in Fig. 11.

Fig. 11 shows another embodiment for generating a synthetic medical image based on several medical images.

In a first step, three medical images I1ⁿ, I2ⁿ, and I3ⁿ are received. Each medical image represents the examination region of a new examination object.

It is possible that the first medical image I1ⁿ, the second medical image I2ⁿ, and the third medical image I3ⁿ represent the examination region of the new examination object at different points in time. However, it is also possible that one or more medical images represent the examination region at the same point in time, but in the form of a different modality and/or under different measurement conditions. Preferably, the first medical image I1ⁿ, the second medical image I2ⁿ, and the third medical image I3ⁿ represent the examination region at different points in time.

Each medial image is divided into a number of patches.

There are various ways to combine the patches of the three images I1ⁿ, I2ⁿ, and I3ⁿ into a new image. In the example shown in Fig. 11, two possibilities are shown, i.e. two new images IN1 and IN2 are generated based on the patches. However, it is also possible that more than two new images are generated, e.g. three or four or more than four.

The new images IN1 and IN2 have the property that each sub-region of the examination region is represented by a patch of one of the images I1ⁿ, I2ⁿ, and I3ⁿ.

A first image embedding E1ⁿ is generated based on the first new image IN1 using the image encoder IE. A second image embedding E2ⁿ is generated based on the second new image IN2 using the image encoder IE.

First noisy data ND1 is provided. The first noisy data ND1 is fed to the denoising model DM of the trained conditional genetic model CGM^{t}. The trained conditional generative model CGM^{t} generates a first synthetic medical image SI1 based on the first noisy data ND1 using the first image embedding E1ⁿ as a condition.

Similarly, second noisy data ND2 is provided. The second noisy data ND2 is fed to the denoising model DM of the trained conditional genetic model CGM^{t}. The trained conditional generative model CGM^{t} generates a second synthetic medical image SI2 based on the second noisy data ND2 using the second image embedding E2ⁿ as a condition.

The synthetic medical images SI1 and SI2 represent the examination region of the new examination object at a point in time that is different from the points in time at which the medical images I1ⁿ, I2ⁿ and I3ⁿ represent the examination region.

The synthetic medical images SI1 and SI2 are combined to obtain a combined synthetic medical image SIC.

The combined synthetic image SIC can be generated from the first synthetic image SI1 and the second synthetic image SI2 by averaging element by element, for example.

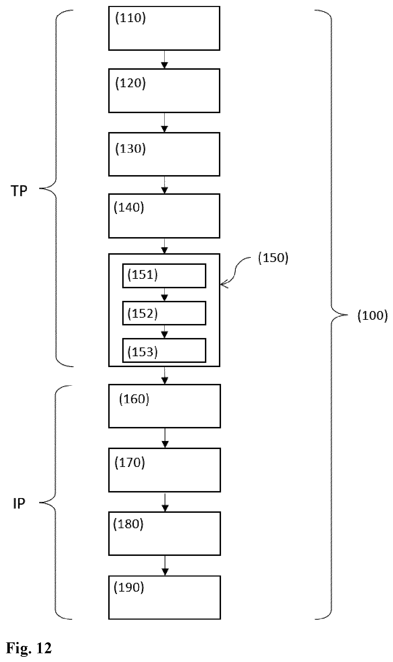

Fig. 12 shows an embodiment of the computer-implemented method of the present disclosure in the form of a flow chart.

The method (100) comprises the steps:
(110) providing a plurality of data sets of a plurality of examination objects, each data set comprising at least two medical images, a first medical image and a second medical image, wherein the first medical image represents an examination region of an examination object at a first point in time and the second medical image represents the examination region of an examination object at a second point in time, wherein the first point in time and the second point in time are different points in time,
(120) providing an image encoder, wherein the image encoder is configured and trained to generate an image embedding based on a medical image,
(130) for each data set: generating an image embedding of the first medical image using the image encoder,
(140) providing a conditional generative model, wherein the conditional generative model is configured to generate a reconstructed medical image based on a medical image, a condition and model parameters,
(150) training the conditional generative model, wherein the training comprises, for each data set:
   (151) generating a reconstructed second medical image based on the second medical image and the image embedding of the first medical image, wherein the image embedding of the first medical image is used as a condition in the generation of the reconstructed second medical image,
   (152) determining a deviation between the second medical image and the reconstructed second medical image,
   (153) reducing the deviation by modifying model parameters of the conditional generative model,
(160) receiving at least one medical image of a new examination object, wherein the at least one medical image represents the examination region of the new examination object at the first time point,
(170) generating at least one image embedding based on the at least one medical image of the new examination object, wherein generating the at least one image embedding comprises: inputting the at least one medical image into the image encoder,
(180) generating a synthetic medical image using the at least one image embedding as a conditional input to the trained conditional generative model,
(190) outputting and/or storing the synthetic medical image and/or transmitting the synthetic medical image to a separate computer system.

The computer-implemented method of the present disclosure can be divided into a training phase and an inference phase.

In the example shown in Fig. 12, the training phase TP comprises steps (110) to (153) and the inference phase IP comprises steps (160) to (190).

The operations in accordance with the teachings herein may be performed by at least one computer system specially constructed for the desired purposes or general-purpose computer system specially configured for the desired purpose by at least one computer program stored in a typically non-transitory computer readable storage medium.

A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the invention.

The term "non-transitory" is used herein to exclude transitory, propagating signals or waves, but to otherwise include any volatile or non-volatile computer memory technology suitable to the application.

The term "computer" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer or processor. The term processor includes a single processing unit or a plurality of distributed or remote such units.

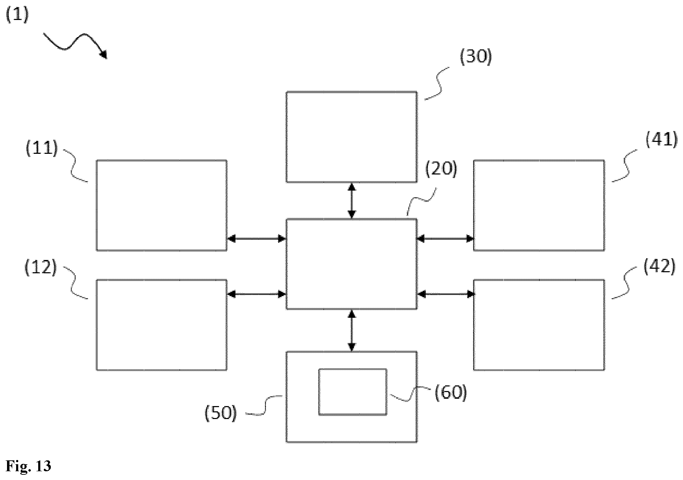

Fig. 13 illustrates a computer system (1) according to some example implementations of the present disclosure in more detail.

Generally, a computer system of exemplary implementations of the present disclosure may be referred to as a computer and may comprise, include, or be embodied in one or more fixed or portable electronic devices. The computer may include one or more of each of a number of components such as, for example, a processing unit (20) connected to a memory (50) (e.g., storage device).

The processing unit (20) may be composed of one or more processors alone or in combination with one or more memories. The processing unit (20) is generally any piece of computer hardware that is capable of processing information such as, for example, data, computer programs and/or other suitable electronic information. The processing unit (20) is composed of a collection of electronic circuits some of which may be packaged as an integrated circuit or multiple interconnected integrated circuits (an integrated circuit at times more commonly referred to as a "chip"). The processing unit (20) may be configured to execute computer programs, which may be stored onboard the processing unit (20) or otherwise stored in the memory (50) of the same or another computer.

The processing unit (20) may be a number of processors, a multi-core processor or some other type of processor, depending on the particular implementation. For example, it may be a central processing unit (CPU), a field programmable gate array (FPGA), a graphics processing unit (GPU) and/or a tensor processing unit (TPU). Further, the processing unit (20) may be implemented using a number of heterogeneous processor systems in which a main processor is present with one or more secondary processors on a single chip. As another illustrative example, the processing unit (20) may be a symmetric multi-processor system containing multiple processors of the same type. In yet another example, the processing unit (20) may be embodied as or otherwise include one or more ASICs, FPGAs or the like. Thus, although the processing unit (20) may be capable of executing a computer program to perform one or more functions, the processing unit (20) of various examples may be capable of performing one or more functions without the aid of a computer program. In either instance, the processing unit (20) may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory (50) may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium or data memory. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display (screen) may be configured to present or otherwise display information to a user, suitable examples of which include a liquid crystal display (LCD), light-emitting diode display (LED), plasma display panel (PDP) or the like. The user input interface(s) (11) may be wired or wireless and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions (60) may be stored in memory (50) and executed by processing unit (20) that is thereby programmed, to implement functions of the systems, subsystems, tools and their respective elements described herein. As will be appreciated, any suitable program code instructions (60) may be loaded onto a computer or other programmable apparatus from a computer-readable storage medium to produce a particular machine, such that the particular machine becomes a means for implementing the functions specified herein. These program code instructions (60) may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions (60) may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions (60) may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions (60) may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code instructions (60) stored in the memory (50). It will also be understood that one or more functions, and combinations of functions, may be implemented by special purpose hardware-based computer systems and/or processing circuitry which perform the specified functions, or combinations of special purpose hardware and program code instructions.

The computer system of the present disclosure may be in the form of a laptop, notebook, netbook, and/or tablet PC; it may also be a component of an MRI scanner, a CT scanner, an ultrasound diagnostic machine or any other device for the generation and/or processing of medical images.

In another aspect, the present disclosure provides a computer program product. Such a computer program product comprises a non-volatile data carrier, such as a CD, a DVD, a USB stick or other medium for storing data. A computer program is stored on the data carrier. The computer program can be loaded into a working memory of a computer system (in particular, into a working memory of a computer system of the present disclosure), where it can cause the computer system to perform the following steps:
- providing a plurality of data sets of a plurality of examination objects, each data set comprising at least two medical images, a first medical image and a second medical image, wherein the first medical image represents an examination region of an examination object at a first point in time and the second medical image represents the examination region of an examination object at a second point in time, wherein the first point in time and the second point in time are different points in time,
- providing an image encoder, wherein the image encoder is configured and trained to generate an image embedding based on a medical image,
- for each data set: generating an image embedding of the first medical image using the image encoder,
- providing a conditional generative model, wherein the conditional generative model is configured to generate a reconstructed medical image based on a medical image, a condition and model parameters,
- training the conditional generative model, wherein the training comprises, for each data set:
   - generating a reconstructed second medical image based on the second medical image and the image embedding of the first medical image, wherein the image embedding of the first medical image is used as a condition in the generation of the reconstructed second medical image,
   - determining a deviation between the second medical image and the reconstructed second medical image,
   - reducing the deviation by modifying model parameters of the conditional generative model,
- receiving at least one medical image of a new examination object, wherein the at least one medical image represents the examination region of the new examination object at the first time point,
- generating at least one image embedding based on the at least one medical image of the new examination object, wherein generating the at least one image embedding comprises: inputting the at least one medical image into the image encoder,
- generating a synthetic medical image using the at least one image embedding as a conditional input to the trained conditional generative model,
- outputting and/or storing the synthetic medical image and/or transmitting the synthetic medical image to a separate computer system.

The computer program product may also be marketed in combination with a contrast agent. Such a combination is also referred to as a kit. Such a kit includes the contrast agent and the computer program product. It is also possible that such a kit includes the contrast agent and means for allowing a purchaser to obtain the computer program, e.g., download it from an Internet site. These means may include a link, i.e., an address of the Internet site from which the computer program may be obtained, e.g., from which the computer program may be downloaded to a computer system connected to the Internet. Such means may include a code (e.g., an alphanumeric string or a QR code, or a DataMatrix code or a barcode or other optically and/or electronically readable code) by which the purchaser can access the computer program. Such a link and/or code may, for example, be printed on a package of the contrast agent and/or printed on a package insert for the contrast agent. A kit is thus a combination product comprising a contrast agent and a computer program (e.g., in the form of access to the computer program or in the form of executable program code on a data carrier) that is offered for sale together.

In another aspect, the present disclosure relates to a use of a contrast agent in a dynamic examination of an examination region of an examination object. In another aspect, the present disclosure relates to a contrast agent for use in a dynamic examination of an examination region of an examination object.

The dynamic examination comprises:
- receiving one or more medical images, wherein the one or more medical images represent the examination region of the examination object at one or more time points before and/or after application of the contrast agent,
- providing an image encoder, wherein the image encoder is configured and trained to generate an image embedding based on the one or more medical images,
- generating at least one image embedding based on the one or medical images using the image encoder,
- providing a trained conditional neural network, wherein the trained conditional generative model is configured and was trained to generate a synthetic medical image based on an image embedding as a condition,
- generating a synthetic medical image using the at least one image embedding as a conditional input to the trained conditional generative model,
- outputting and/or storing the synthetic medical image and/or transmitting the synthetic medical image to a separate computer system
wherein training of the trained conditional generative model comprised:
- providing a plurality of data sets of a plurality of reference examination objects, each data set comprising at least two reference medical images, one or more first reference medical images and a second reference medical image, wherein the one or more first reference medical images represent the examination region of the reference examination object at the one or more points in time before and/or after the application of the contrast agent and the second reference medical image represents the examination region of the reference examination object at another point in time before and/or after application of the contrast agent,
- for each data set: generating one or more reference image embeddings of the one or more first reference medical images using the image encoder,
- training the conditional generative model, wherein the training comprises, for each data set:
   - generating a reconstructed second reference medical image based on the second reference medical image and the one or more reference image embeddings of the one or more first reference medical images, wherein the one or more reference image embeddings of the one or more first reference medical images is/are used as condition in the generation of the reconstructed second reference medical image,
   - determining a deviation between the second reference medical image and the reconstructed second reference medical image,
   - reducing the deviation by modifying model parameters of the conditional generative mode.

The term "reference" is used in some places in this disclosure to distinguish the data used to train and/or validate the conditional generative model from the data used to generate a synthetic medical image using the trained conditional generative model. Thus, the data used to train and/or validate the conditional generative model represent "reference examination objects" whereas data used for generating a synthetic medical image represent a (new) examination object. Analogously, medical images and image embeddings representing a reference examination object are referred to in some places as "reference medical images". However, the term "reference" is not to be understood in any other restrictive sense; this distinction serves only to prevent a clarity objection in patent grant proceedings.

In an embodiment of the present disclosure, each medical image is an MRI image.

In an embodiment of the present disclosure, the dynamic examination is a dynamic MRI examination.

In an embodiment of the present disclosure, the contrast agent is a hepatobiliary contrast agent.

In an embodiment of the present disclosure, the examination region is a human liver or a part thereof.

In an embodiment of the present disclosure, the one or more medical images are one or more MRI images representing the liver or a part thereof of the examination object in one or more of the following phases of a dynamic MRI examination using a hepatobiliary contrast agent: native phase, arterial phase, portal venous phase, transitional phase, and the synthetic medical image is a synthetic MRI image representing the liver or the part thereof of the examination object in a hepatobiliary phase.

In an embodiment of the present disclosure, the conditional generative model is trained on a plurality of data sets of a plurality of reference examination objects, each data set comprising at least two reference MRI images, one or more first reference MRI images and a second reference MRI image, wherein the one or more first reference MRI images represent the liver or a part thereof of the reference examination object in one or more of the following phases of a dynamic MRI examination using a hepatobiliary contrast agent: native phase, arterial phase, portal venous phase, transitional phase, and the second reference MRI image represents the liver or the part thereof of the reference examination object in a hepatobiliary phase.

In an embodiment of the present invention, the computer-implemented method and/or the dynamic examination comprises:
- receiving one or more MRI images, wherein the one or more MRI images represent a liver or a part thereof of an examination object in one or more of the following phases before and/or after application of a hepatobiliary contrast agent: native phase, arterial phase, portal venous phase, transitional phase,
- providing an image encoder, wherein the image encoder is configured and trained to generate an image embedding based on the one or more MRI images,
- generating at least one image embedding based on the one or MRI images using the image encoder,
- providing a trained conditional neural network, wherein the trained conditional generative model is configured and was trained to generate a synthetic medical image based on an image embedding as a condition,
- generating a synthetic MRI image using the at least one image embedding as a conditional input to the trained conditional generative model, wherein the synthetic MRI image represents the liver or the part thereof of the examination object in a hepatobiliary phase after application of the hepatobiliary contrast agent,
- outputting and/or storing the synthetic MRI image and/or transmitting the synthetic MRI image to a separate computer system,
wherein training of the trained conditional generative model comprised:
- providing a plurality of data sets of a plurality of reference examination objects, each data set comprising at least two reference MRI images, one or more first reference MRI images and a second reference MRI image,
   ∘ wherein the one or more first reference MRI images represent the liver or a part thereof the reference examination object in one or more of the following phases before and/or after application of a hepatobiliary contrast agent: native phase, arterial phase, portal venous phase, transitional phase,
   ∘ wherein the second reference MRI image represents the liver or the part thereof of the reference examination object in a hepatobiliary phase after application of the hepatobiliary contrast agent,
- for each data set: generating one or more reference image embeddings of the one or more first reference MRI images using the image encoder,
- training the conditional generative model, wherein the training comprises, for each data set:
   - generating a reconstructed second reference MRI image based on the second reference MRI image and the one or more reference image embeddings of the one or more first reference MRI images, wherein the one or more reference image embeddings of the one or more first reference MRI images is/are used as condition in the generation of the reconstructed second reference MRI image,
   - determining a deviation between the second reference MRI image and the reconstructed second reference MRI image,
   - reducing the deviation by modifying model parameters of the conditional generative mode.

## Claims

1. A computer-implemented method comprising:
- providing a plurality of data sets of a plurality of examination objects, each data set (DS) comprising at least two medical images, a first medical image (I1) and a second medical image (I2), wherein the first medical image (I1) represents an examination region of an examination object at a first point in time and the second medical image (I2) represents the examination region of the examination object at a second point in time, wherein the first point in time and the second point in time are different points in time,
- providing an image encoder (IE), wherein the image encoder (IE) is configured and trained to generate an image embedding based on a medical image,
- for each data set (DS): generating an image embedding (E) of the first medical image (I1) using the image encoder (IE),
- providing a conditional generative model (CGM), wherein the conditional generative model (CGM) is configured to generate a reconstructed medical image based on a medical image, a condition and model parameters,
- training the conditional generative model (CGM), wherein the training comprises, for each data set (DS):
• generating a reconstructed second medical image (RI2) based on the second medical image (I2) and the image embedding (E) of the first medical image (I1), wherein the image embedding (E) of the first medical image (I1) is used as a condition in the generation of the reconstructed second medical image (RI2),
• determining a deviation between the second medical image (I2) and the reconstructed second medical image (RI2),
• reducing the deviation by modifying model parameters of the conditional generative model (CGM),
- receiving at least one medical image (Iⁿ) of a new examination object, wherein the at least one medical image (Iⁿ) represents the examination region of the new examination object at the first time point,
- generating at least one image embedding (Eⁿ) based on the at least one medical image (Iⁿ) of the new examination object using the image encoder (IE),
- generating a synthetic medical image (SI) using the at least one image embedding (Eⁿ) as a conditional input to the trained conditional generative model (CGM^{t}),
- outputting and/or storing the synthetic medical image (SI) and/or transmitting the synthetic medical image (SI) to a separate computer system, wherein the at least two medical images (I1, I2) of each data set (DS) are MRI images and/or CT images, and the at least one medical image (Iⁿ) of the new examination object is an MRI image or CT image.

2. The method of claim 1, wherein each examination of the plurality of examination objects is a human being, wherein the new examination object is a human being, and the examination region of each examination object of the plurality of examination objects and the examination region of the new examination object is or comprises a liver, kidney, heart, lung, brain, stomach, bladder, prostate, intestine, thyroid, eye, breast or a part of said parts or another part of the body of the examination object.

3. The method of any one of claims 1 to 2, wherein the at least two medical images (I1, I2) of each data set (DS) are MRI images, and the at least one medical image (Iⁿ) of the new examination object is an MRI image.

4. The method of any one of claims 1 to 2,
wherein each data set (DS) comprises a number of p first medical images and the second medical image,
wherein the p first medical images represent the examination region of the examination object at q different points in time and the second medical image represents the examination region of the examination object at point in time which is different from the q points in time, wherein p is 1, 2, 3, 4, 5, 6, 7, 8, 9 or 10, q is 1, 2, 3, 4, 5, 6, 7, 8, 9 or 10, and p ≥ q.

5. The method of any one of claims 1 to 4,
wherein the at least two medical images (II, I2) of each data set (DS) comprise multiple first medical images and the second medical image,
wherein each first medical image of the multiple first medical images represents the examination region of the examination object at a different point in time,
wherein generating an image embedding of the first medical image using the image encoder (IE) comprises: generating an image embedding (E1, E2, E3) of each first medical image and combining the image embeddings (E1, E2, E3) into a combined image embedding (EC),
wherein generating a reconstructed second medical image (RI2) based on the second medical image and the image embedding of the first medical image comprises: generating a reconstructed second medical image (RI2) based on the second medical image and the combined image embedding (EC) of the first medical images, wherein the combined image embedding (EC) of the first medical images is used as a condition in the generation of the reconstructed second medical image (RI2).

6. The method of claim 5,
wherein receiving at least one medical image of a new examination object comprises: receiving multiple medical images of the new examination object,
wherein each medical image of the multiple medical images represents the examination region of the new examination object at a different point in time,
wherein generating at least one image embedding based on the at least one medical image of the new examination object using the image encoder (IE) comprises: generating an image embedding (E1ⁿ, E2ⁿ, E3ⁿ) of each medical image of the multiple medical images using the image encoder (IE) and combining the image embeddings (E1ⁿ, E2ⁿ, E3ⁿ) into a combined image embedding (ECⁿ),
wherein generating the synthetic medical image (SI) using the at least one image embedding as a conditional input to the conditional generative model (CGM^{t}) comprises: generating the synthetic medical image using the combined image embedding (ECⁿ) as a conditional input to the conditional generative model (CGM^{t}).

7. The method of any claim 6,
wherein the at least two medical images of each data set (DS) comprise multiple first medical images and the second medical image,
wherein each first medical image of the multiple first medical images represents a liver or a part thereof of a human being in one of the following phases of a dynamic contrast-enhanced MRI examination using a hepatobiliary contrast agent: native phase, arterial phase, portal venous phase, transitional phase,
wherein the second medical image represents the liver or the part thereof of the human being in a hepatobiliary phase of the dynamic contrast-enhanced MRI examination,
wherein each medical image of the multiple medical images of the new examination object represents the liver or a part thereof of the new examination object in one of the following phases of a dynamic contrast-enhanced MRI examination using a hepatobiliary contrast agent: native phase, arterial phase, portal venous phase, transitional phase,
wherein the synthetic medical image represents the liver or the part thereof of the new examination object in a hepatobiliary phase of the dynamic contrast-enhanced MRI examination.

8. The method of any of claims 1 to 7,
wherein the conditional generative model (CGM) is a conditional diffusion model comprising a noising model (NM) and a denoising model (DM),
wherein the noising model (NM) is configured to receive the second medical image and produce noisy data in response to receipt of the second medical image,
wherein the denoising model (DM) is configured to reconstruct the second medical image from the noisy data.

9. The method of any of claims 1 to 8, wherein the conditional generative model (CGM) is a latent diffusion model.

10. The method of any of claims 1 to 9, further the training further comprises:
- masking at least a part of the first image and/or image embedding.

11. The method of any of claims 1 to 10,
wherein the at least two medical images of each data set (DS) comprise multiple first medical images and the second medical image,
wherein each first medical image of the multiple first medical images represents the examination region of the examination object at a different point in time,
wherein generating an image embedding of the first medical image using the image encoder (IE) comprises:
- masking at least a part of one or more first medical image of the multiple first medical images,
- generating an image embedding (E1, E2, E2) of each first medical image and each at least partly masked first medical image, and combining the image embeddings (E1, E2, E2) into a combined image embedding (EC),
wherein generating a reconstructed second medical image based on the second medical image and the image embedding of the first medical image comprises: generating a reconstructed second medical image based on the second medical image and the combined image embedding (EC) of the first medical images, wherein the combined image embedding (EC) of the first medical images is used as a condition in the generation of the reconstructed second medical image.

12. The method of any of claims 1 to 11,
wherein the at least two medical images of each data set (DS) comprise a number p of first medical images and the second medical image, wherein p is 1, 2, 3, 4, 5, 6, 7, 8, 9 or 10,
wherein each first medical image of the number p of first medical images represents the examination region of the examination object at a different point in time,
wherein generating an image embedding of the first medical image using the image encoder (IE) comprises:
- dividing each first medical image of the number p of first medical images into multiple patches (P1, P2, P3, P4, P5, P6, P7, P8, P9),
- generating an image embedding (E1) based on selected patches of the multiple patches using the image encoder (IE), wherein each selected patch represents a different sub-region of the examination region,
wherein generating a reconstructed second medical image based on the second medical image and the image embedding of the first medical image comprises: generating a reconstructed second medical image based on the second medical image and the image embedding, wherein the image embedding of is used as a condition in the generation of the reconstructed second medical image.

13. A computer system (1) comprising:
a processor (20); and
a memory (50) storing an application program (60) configured to perform, when executed by the processor (20), an operation, the operation comprising:
- providing a plurality of data sets of a plurality of examination objects, each data set (DS) comprising at least two medical images, a first medical image (I1) and a second medical image (I2), wherein the first medical image (I1) represents an examination region of an examination object at a first point in time and the second medical image (I2) represents the examination region of the examination object at a second point in time, wherein the first point in time and the second point in time are different points in time,
- providing an image encoder (IE), wherein the image encoder (IE) is configured and trained to generate an image embedding based on a medical image,
- for each data set (DS): generating an image embedding of the first medical image (I1) using the image encoder (IE),
- providing a conditional generative model (CGM), wherein the conditional generative model (CGM) is configured to generate a reconstructed medical image based on a medical image, a condition and model parameters,
- training the conditional generative model (CGM), wherein the training comprises, for each data set (DS):
• generating a reconstructed second medical image (RI2) based on the second medical image (I2) and the image embedding of the first medical image (I1), wherein the image embedding of the first medical image (I1) is used as a condition in the generation of the reconstructed second medical image (RI2),
• determining a deviation between the second medical image (I2) and the reconstructed second medical image (RI2),
• reducing the deviation by modifying model parameters of the conditional generative model (CGM),
- receiving at least one medical image (Iⁿ) of a new examination object, wherein the at least one medical image (Iⁿ) represents the examination region of the new examination object at the first time point,
- generating at least one image embedding (Eⁿ) based on the at least one medical image (Iⁿ) of the new examination object using the image encoder (IE),
- generating a synthetic medical image (SI) using the at least one image embedding (Eⁿ) as a conditional input to the trained conditional generative model (CGM^{t}),
- outputting and/or storing the synthetic medical image (SI) and/or transmitting the synthetic medical image (SI) to a separate computer system, wherein the at least two medical images (I1, I2) of each data set (DS) are MRI images and/or CT images, and the at least one medical image (Iⁿ) of the new examination object is an MRI image or CT image.

14. A non-transitory computer readable storage medium having stored thereon software instructions that, when executed by a processor (20) of a computer system (1), cause the computer system (1) to execute the following steps:
- providing a plurality of data sets of a plurality of examination objects, each data set (DS) comprising at least two medical images, a first medical image (I1) and a second medical image (I2), wherein the first medical image (I1) represents an examination region of an examination object at a first point in time and the second medical image (I2) represents the examination region of the examination object at a second point in time, wherein the first point in time and the second point in time are different points in time,
- providing an image encoder (IE), wherein the image encoder (IE) is configured and trained to generate an image embedding based on a medical image,
- for each data set (DS): generating an image embedding of the first medical image (I1) using the image encoder (IE),
- providing a conditional generative model (CGM), wherein the conditional generative model (CGM) is configured to generate a reconstructed medical image based on a medical image, a condition and model parameters,
- training the conditional generative model (CGM), wherein the training comprises, for each data set (DS):
• generating a reconstructed second medical image (RI2) based on the second medical image (I2) and the image embedding of the first medical image (I1), wherein the image embedding of the first medical image (I1) is used as a condition in the generation of the reconstructed second medical image (RI2),
• determining a deviation between the second medical image (I2) and the reconstructed second medical image (RI2),
• reducing the deviation by modifying model parameters of the conditional generative model (CGM),
- receiving at least one medical image (Iⁿ) of a new examination object, wherein the at least one medical image (Iⁿ) represents the examination region of the new examination object at the first time point,
- generating at least one image embedding (Eⁿ) based on the at least one medical image (Iⁿ) of the new examination object using the image encoder (IE),
- generating a synthetic medical image (SI) using the at least one image embedding (Eⁿ) as a conditional input to the trained conditional generative model (CGM^{t}),
- outputting and/or storing the synthetic medical image (SI) and/or transmitting the synthetic medical image (SI) to a separate computer system, wherein the at least two medical images (I1, I2) of each data set (DS) are MRI images and/or CT images, and the at least one medical image (Iⁿ) of the new examination object is an MRI image or CT image.

## Patentansprüche

1. Computerimplementiertes Verfahren, umfassend:
- Bereitstellen einer Vielzahl von Datensätzen einer Vielzahl von Untersuchungsobjekten, wobei jeder Datensatz (DS) mindestens zwei medizinische Bilder umfasst, ein erstes medizinisches Bild (I1) und ein zweites medizinisches Bild (I2), wobei das erste medizinische Bild (I1) einen Untersuchungsbereich eines Untersuchungsobjekts zu einem ersten Zeitpunkt darstellt und das zweite medizinische Bild (I2) den Untersuchungsbereich des Untersuchungsobjekts zu einem zweiten Zeitpunkt darstellt, wobei der erste Zeitpunkt und der zweite Zeitpunkt unterschiedliche Zeitpunkte sind,
- Bereitstellen eines Bildencoders (IE), wobei der Bildencoder (IE) konfiguriert und trainiert ist, um ein Bild-Embedding basierend auf einem medizinischen Bild zu erzeugen,
- für jeden Datensatz (DS): Erzeugen eines Bild-Embeddings (E) des ersten medizinischen Bildes (I1) unter Verwendung des Bildencoders (IE),
- Bereitstellen eines konditionellen generativen Modells (CGM), wobei das konditionelle generative Modell (CGM) konfiguriert ist, um ein rekonstruiertes medizinisches Bild basierend auf einem medizinischen Bild, einer Bedingung und Modellparametern zu erzeugen,
- Trainieren des konditionellen generativen Modells (CGM), wobei das Trainieren für jeden Datensatz (DS) umfasst:
• Erzeugen eines rekonstruierten zweiten medizinischen Bildes (RI2) basierend auf dem zweiten medizinischen Bild (I2) und dem Bild-Embedding (E) des ersten medizinischen Bildes (I1), wobei das Bild-Embedding (E) des ersten medizinischen Bildes (I1) als Bedingung bei der Erzeugung des rekonstruierten zweiten medizinischen Bildes (RI2) verwendet wird,
• Bestimmen einer Abweichung zwischen dem zweiten medizinischen Bild (I2) und dem rekonstruierten zweiten medizinischen Bild (RI2),
• Reduzieren der Abweichung durch Modifizieren von Modellparametern des konditionellen generativen Modells (CGM),
- Empfangen mindestens eines medizinischen Bildes (Iⁿ) eines neuen Untersuchungsobjekts, wobei das mindestens eine medizinische Bild (Iⁿ) den Untersuchungsbereich des neuen Untersuchungsobjekts zum ersten Zeitpunkt darstellt,
- Erzeugen mindestens eines Bild-Embeddings (Eⁿ) basierend auf dem mindestens einen medizinischen Bild (Iⁿ) des neuen Untersuchungsobjekts unter Verwendung des Bildencoders (IE),
- Erzeugen eines synthetischen medizinischen Bildes (SI) unter Verwendung des mindestens einen Bild-Embeddings (Eⁿ) als konditionelle Eingabe in das trainierte konditionelle generative Modell (CGM^{t}),
- Ausgeben und/oder Speichern des synthetischen medizinischen Bildes (SI) und/oder Übermitteln des synthetischen medizinischen Bildes (SI) an ein separates Computersystem,
wobei die mindestens zwei medizinischen Bilder (I1, I2) jedes Datensatzes (DS) MRT-Bilder und/oder CT-Bilder sind, und das mindestens eine medizinische Bild (Iⁿ) des neuen Untersuchungsobjekts ein MRT-Bild oder CT-Bild ist.

2. Verfahren nach Anspruch 1, wobei jedes Untersuchungsobjekt der Vielzahl von Untersuchungsobjekten ein Mensch ist, wobei das neue Untersuchungsobjekt ein Mensch ist, und wobei der Untersuchungsbereich jedes Untersuchungsobjekts der Vielzahl von Untersuchungsobjekten und der Untersuchungsbereich des neuen Untersuchungsobjekts eine Leber, Niere, Herz, Lunge, Gehirn, Magen, Blase, Prostata, Darm, Schilddrüse, Auge, Brust oder ein Teil der genannten Teile oder ein anderer Teil des Körpers des Untersuchungsobjekts ist oder umfasst.

3. Verfahren nach einem der Ansprüche 1 bis 2, wobei die mindestens zwei medizinischen Bilder (I1, I2) jedes Datensatzes (DS) MRT-Bilder sind, und das mindestens eine medizinische Bild (Iⁿ) des neuen Untersuchungsobjekts ein MRT-Bild ist.

4. Verfahren nach einem der Ansprüche 1 bis 2,
wobei jeder Datensatz (DS) eine Anzahl von p ersten medizinischen Bildern und das zweite medizinische Bild umfasst,
wobei die p ersten medizinischen Bilder den Untersuchungsbereich des Untersuchungsobjekts zu q verschiedenen Zeitpunkten darstellen und das zweite medizinische Bild den Untersuchungsbereich des Untersuchungsobjekts zu einem Zeitpunkt darstellt, der sich von den q Zeitpunkten unterscheidet, wobei p 1, 2, 3, 4, 5, 6, 7, 8, 9 oder 10 ist, q 1, 2, 3, 4, 5, 6, 7, 8, 9 oder 10 ist, und p ≥ q.

5. Verfahren nach einem der Ansprüche 1 bis 4,
wobei die mindestens zwei medizinischen Bilder (I1, I2) jedes Datensatzes (DS) mehrere erste medizinische Bilder und das zweite medizinische Bild umfassen,
wobei jedes erste medizinische Bild der mehreren ersten medizinischen Bilder den Untersuchungsbereich des Untersuchungsobjekts zu einem unterschiedlichen Zeitpunkt darstellt,
wobei das Erzeugen eines Bild-Embeddings des ersten medizinischen Bildes unter Verwendung des Bildencoders (IE) umfasst: Erzeugen eines Bild-Embeddings (E1, E2, E3) jedes ersten medizinischen Bildes und Kombinieren der Bild-Embeddings (E1, E2, E3) zu einem kombinierten Bild-Embedding (EC),
wobei das Erzeugen eines rekonstruierten zweiten medizinischen Bildes (RI2) basierend auf dem zweiten medizinischen Bild und dem Bild-Embedding des ersten medizinischen Bildes umfasst: Erzeugen eines rekonstruierten zweiten medizinischen Bildes (RI2) basierend auf dem zweiten medizinischen Bild und dem kombinierten Bild-Embedding (EC) der ersten medizinischen Bilder, wobei das kombinierte Bild-Embedding (EC) der ersten medizinischen Bilder als Bedingung bei der Erzeugung des rekonstruierten zweiten medizinischen Bildes (RI2) verwendet wird.

6. Verfahren nach Anspruch 5,
wobei das Empfangen mindestens eines medizinischen Bildes eines neuen Untersuchungsobjekts umfasst: Empfangen mehrerer medizinischer Bilder des neuen Untersuchungsobjekts,
wobei jedes medizinische Bild der mehreren medizinischen Bilder den Untersuchungsbereich des neuen Untersuchungsobjekts zu einem unterschiedlichen Zeitpunkt darstellt,
wobei das Erzeugen mindestens eines Bild-Embeddings basierend auf dem mindestens einen medizinischen Bild des neuen Untersuchungsobjekts unter Verwendung des Bildencoders (IE) umfasst: Erzeugen eines Bild-Embeddings (E1ⁿ, E2ⁿ, E3ⁿ) jedes medizinischen Bildes der mehreren medizinischen Bilder unter Verwendung des Bildencoders (IE) und Kombinieren der Bild-Embeddings (E1ⁿ, E2ⁿ, E3ⁿ) zu einem kombinierten Bild-Embedding (ECⁿ),
wobei das Erzeugen des synthetischen medizinischen Bildes (SI) unter Verwendung des mindestens einen Bild-Embeddings als konditionelle Eingabe in das konditionelle generative Modell (CGM^{t}) umfasst: Erzeugen des synthetischen medizinischen Bildes unter Verwendung des kombinierten Bild-Embeddings (ECⁿ) als konditionelle Eingabe in das konditionelle generative Modell (CGM^{t}).

7. Verfahren nach Anspruch 6,
wobei die mindestens zwei medizinischen Bilder jedes Datensatzes (DS) mehrere erste medizinische Bilder und das zweite medizinische Bild umfassen,
wobei jedes erste medizinische Bild der mehreren ersten medizinischen Bilder eine Leber oder einen Teil davon eines Menschen in einer der folgenden Phasen einer dynamischen kontrastverstärkten MRT-Untersuchung unter Verwendung eines hepatobiliären Kontrastmittels darstellt: native Phase, arterielle Phase, portalvenöse Phase, Übergangsphase,
wobei das zweite medizinische Bild die Leber oder den Teil davon des Menschen in einer hepatobiliären Phase der dynamischen kontrastverstärkten MRT-Untersuchung darstellt,
wobei jedes medizinische Bild der mehreren medizinischen Bilder des neuen Untersuchungsobjekts die Leber oder einen Teil davon des neuen Untersuchungsobjekts in einer der folgenden Phasen einer dynamischen kontrastverstärkten MRT-Untersuchung unter Verwendung eines hepatobiliären Kontrastmittels darstellt: native Phase, arterielle Phase, portalvenöse Phase, Übergangsphase,
wobei das synthetische medizinische Bild die Leber oder den Teil davon des neuen Untersuchungsobjekts in einer hepatobiliären Phase der dynamischen kontrastverstärkten MRT-Untersuchung darstellt.

8. Verfahren nach einem der Ansprüche 1 bis 7,
wobei das konditionelle generative Modell (CGM) ein konditionelles Diffusionsmodell ist, das ein Verrauschungsmodell (NM) und ein Entrauschungsmodell (DM) umfasst,
wobei das Verrauschungsmodell (NM) konfiguriert ist, um das zweite medizinische Bild zu empfangen und verrauschte Daten als Antwort auf den Empfang des zweiten medizinischen Bildes zu erzeugen,
wobei das Entrauschungsmodell (DM) konfiguriert ist, um das zweite medizinische Bild aus den verrauschten Daten zu rekonstruieren.

9. Verfahren nach einem der Ansprüche 1 bis 8, wobei das konditionelle generative Modell (CGM) ein latentes Diffusionsmodell ist.

10. Verfahren nach einem der Ansprüche 1 bis 9, wobei das Trainieren ferner umfasst:
- Maskieren mindestens eines Teils des ersten Bildes und/oder des Bild-Embeddings.

11. Verfahren nach einem der Ansprüche 1 bis 10,
wobei die mindestens zwei medizinischen Bilder jedes Datensatzes (DS) mehrere erste medizinische Bilder und das zweite medizinische Bild umfassen,
wobei jedes erste medizinische Bild der mehreren ersten medizinischen Bilder den Untersuchungsbereich des Untersuchungsobjekts zu einem unterschiedlichen Zeitpunkt darstellt,
wobei das Erzeugen eines Bild-Embeddings des ersten medizinischen Bildes unter Verwendung des Bildencoders (IE) umfasst:
- Maskieren mindestens eines Teils von einem oder mehreren ersten medizinischen Bildern der mehreren ersten medizinischen Bilder,
- Erzeugen eines Bild-Embeddings (E1, E2, E2) jedes ersten medizinischen Bildes und jedes zumindest teilweise maskierten ersten medizinischen Bildes und Kombinieren der Bild-Embeddings (E1, E2, E2) zu einem kombinierten Bild-Embedding (EC),
wobei das Erzeugen eines rekonstruierten zweiten medizinischen Bildes basierend auf dem zweiten medizinischen Bild und dem Bild-Embedding des ersten medizinischen Bildes umfasst: Erzeugen eines rekonstruierten zweiten medizinischen Bildes basierend auf dem zweiten medizinischen Bild und dem kombinierten Bild-Embedding (EC) der ersten medizinischen Bilder, wobei das kombinierte Bild-Embedding (EC) der ersten medizinischen Bilder als Bedingung bei der Erzeugung des rekonstruierten zweiten medizinischen Bildes verwendet wird.

12. Verfahren nach einem der Ansprüche 1 bis 11,
wobei die mindestens zwei medizinischen Bilder jedes Datensatzes (DS) eine Anzahl p von ersten medizinischen Bildern und das zweite medizinische Bild umfassen, wobei p 1, 2, 3, 4, 5, 6, 7, 8, 9 oder 10 ist,
wobei jedes erste medizinische Bild der Anzahl p von ersten medizinischen Bildern den Untersuchungsbereich des Untersuchungsobjekts zu einem unterschiedlichen Zeitpunkt darstellt,
wobei das Erzeugen eines Bild-Embeddings des ersten medizinischen Bildes unter Verwendung des Bildencoders (IE) umfasst:
- Unterteilen jedes ersten medizinischen Bildes der Anzahl p von ersten medizinischen Bildern in mehrere Bildausschnitte (P1, P2, P3, P4, P5, P6, P7, P8, P9),
- Erzeugen eines Bild-Embeddings (E1) basierend auf ausgewählten Bildausschnitten der mehreren Bildausschnitte unter Verwendung des Bildencoders (IE), wobei jeder ausgewählte Bildausschnitt einen unterschiedlichen Teilbereich des Untersuchungsbereichs darstellt,
wobei das Erzeugen eines rekonstruierten zweiten medizinischen Bildes basierend auf dem zweiten medizinischen Bild und dem Bild-Embedding des ersten medizinischen Bildes umfasst: Erzeugen eines rekonstruierten zweiten medizinischen Bildes basierend auf dem zweiten medizinischen Bild und dem Bild-Embedding, wobei das Bild-Embedding als Bedingung bei der Erzeugung des rekonstruierten zweiten medizinischen Bildes verwendet wird.

13. Computersystem (1), umfassend:
einen Prozessor (20); und
einen Speicher (50), der ein Anwendungsprogramm (60) speichert, das konfiguriert ist, um bei Ausführung durch den Prozessor (20) eine Operation durchzuführen, wobei die Operation umfasst:
- Bereitstellen einer Vielzahl von Datensätzen einer Vielzahl von Untersuchungsobjekten, wobei jeder Datensatz (DS) mindestens zwei medizinische Bilder umfasst, ein erstes medizinisches Bild (I1) und ein zweites medizinisches Bild (I2), wobei das erste medizinische Bild (I1) einen Untersuchungsbereich eines Untersuchungsobjekts zu einem ersten Zeitpunkt darstellt und das zweite medizinische Bild (I2) den Untersuchungsbereich des Untersuchungsobjekts zu einem zweiten Zeitpunkt darstellt, wobei der erste Zeitpunkt und der zweite Zeitpunkt unterschiedliche Zeitpunkte sind,
- Bereitstellen eines Bildencoders (IE), wobei der Bildencoder (IE) konfiguriert und trainiert ist, um ein Bild-Embedding basierend auf einem medizinischen Bild zu erzeugen,
- für jeden Datensatz (DS): Erzeugen eines Bild-Embeddings des ersten medizinischen Bildes (I1) unter Verwendung des Bildencoders (IE),
- Bereitstellen eines konditionellen generativen Modells (CGM), wobei das konditionelle generative Modell (CGM) konfiguriert ist, um ein rekonstruiertes medizinisches Bild basierend auf einem medizinischen Bild, einer Bedingung und Modellparametern zu erzeugen,
- Trainieren des konditionellen generativen Modells (CGM), wobei das Trainieren für jeden Datensatz (DS) umfasst:
• Erzeugen eines rekonstruierten zweiten medizinischen Bildes (RI2) basierend auf dem zweiten medizinischen Bild (I2) und dem Bild-Embedding des ersten medizinischen Bildes (I1), wobei das Bild-Embedding des ersten medizinischen Bildes (I1) als Bedingung bei der Erzeugung des rekonstruierten zweiten medizinischen Bildes (RI2) verwendet wird,
• Bestimmen einer Abweichung zwischen dem zweiten medizinischen Bild (I2) und dem rekonstruierten zweiten medizinischen Bild (RI2),
• Reduzieren der Abweichung durch Modifizieren von Modellparametern des konditionellen generativen Modells (CGM),
- Empfangen mindestens eines medizinischen Bildes (Iⁿ) eines neuen Untersuchungsobjekts, wobei das mindestens eine medizinische Bild (Iⁿ) den Untersuchungsbereich des neuen Untersuchungsobjekts zum ersten Zeitpunkt darstellt,
- Erzeugen mindestens eines Bild-Embeddings (Eⁿ) basierend auf dem mindestens einen medizinischen Bild (Iⁿ) des neuen Untersuchungsobjekts unter Verwendung des Bildencoders (IE),
- Erzeugen eines synthetischen medizinischen Bildes (SI) unter Verwendung des mindestens einen Bild-Embeddings (Eⁿ) als konditionelle Eingabe in das trainierte konditionelle generative Modell (CGM^{t}),
- Ausgeben und/oder Speichern des synthetischen medizinischen Bildes (SI) und/oder Übermitteln des synthetischen medizinischen Bildes (SI) an ein separates Computersystem,
wobei die mindestens zwei medizinischen Bilder (I1, I2) jedes Datensatzes (DS) MRT-Bilder und/oder CT-Bilder sind, und das mindestens eine medizinische Bild (Iⁿ) des neuen Untersuchungsobjekts ein MRT-Bild oder CT-Bild ist.

14. Nichtflüchtiges, computerlesbares Speichermedium, das Softwareanweisungen speichert, die bei Ausführung durch einen Prozessor eine Operation durchführen, wobei die Operation umfasst:
- Bereitstellen einer Vielzahl von Datensätzen einer Vielzahl von Untersuchungsobjekten, wobei jeder Datensatz (DS) mindestens zwei medizinische Bilder umfasst, ein erstes medizinisches Bild (I1) und ein zweites medizinisches Bild (I2), wobei das erste medizinische Bild (I1) einen Untersuchungsbereich eines Untersuchungsobjekts zu einem ersten Zeitpunkt darstellt und das zweite medizinische Bild (I2) den Untersuchungsbereich des Untersuchungsobjekts zu einem zweiten Zeitpunkt darstellt, wobei der erste Zeitpunkt und der zweite Zeitpunkt unterschiedliche Zeitpunkte sind,
- Bereitstellen eines Bildencoders (IE), wobei der Bildencoder (IE) konfiguriert und trainiert ist, um ein Bild-Embedding basierend auf einem medizinischen Bild zu erzeugen,
- für jeden Datensatz (DS): Erzeugen eines Bild-Embeddings des ersten medizinischen Bildes (I1) unter Verwendung des Bildencoders (IE),
- Bereitstellen eines konditionellen generativen Modells (CGM), wobei das konditionelle generative Modell (CGM) konfiguriert ist, um ein rekonstruiertes medizinisches Bild basierend auf einem medizinischen Bild, einer Bedingung und Modellparametern zu erzeugen,
- Trainieren des konditionellen generativen Modells (CGM), wobei das Trainieren für jeden Datensatz (DS) umfasst:
• Erzeugen eines rekonstruierten zweiten medizinischen Bildes (RI2) basierend auf dem zweiten medizinischen Bild (I2) und dem Bild-Embedding des ersten medizinischen Bildes (I1), wobei das Bild-Embedding des ersten medizinischen Bildes (I1) als Bedingung bei der Erzeugung des rekonstruierten zweiten medizinischen Bildes (RI2) verwendet wird,
• Bestimmen einer Abweichung zwischen dem zweiten medizinischen Bild (I2) und dem rekonstruierten zweiten medizinischen Bild (RI2),
• Reduzieren der Abweichung durch Modifizieren von Modellparametern des konditionellen generativen Modells (CGM),
- Empfangen mindestens eines medizinischen Bildes (Iⁿ) eines neuen Untersuchungsobjekts, wobei das mindestens eine medizinische Bild (Iⁿ) den Untersuchungsbereich des neuen Untersuchungsobjekts zum ersten Zeitpunkt darstellt,
- Erzeugen mindestens eines Bild-Embeddings (Eⁿ) basierend auf dem mindestens einen medizinischen Bild (Iⁿ) des neuen Untersuchungsobjekts unter Verwendung des Bildencoders (IE),
- Erzeugen eines synthetischen medizinischen Bildes (SI) unter Verwendung des mindestens einen Bild-Embeddings (Eⁿ) als konditionelle Eingabe in das trainierte konditionelle generative Modell (CGM^{t}),
- Ausgeben und/oder Speichern des synthetischen medizinischen Bildes (SI) und/oder Übermitteln des synthetischen medizinischen Bildes (SI) an ein separates Computersystem,
wobei die mindestens zwei medizinischen Bilder (I1, I2) jedes Datensatzes (DS) MRT-Bilder und/oder CT-Bilder sind, und das mindestens eine medizinische Bild (Iⁿ) des neuen Untersuchungsobjekts ein MRT-Bild oder CT-Bild ist.

## Revendications

1. Procédé mis en œuvre par ordinateur, comprenant :
- la fourniture d'une pluralité d'ensembles de données d'une pluralité d'objets d'examen, chaque ensemble de données (DS) comprenant au moins deux images médicales, une première image médicale (I1) et une deuxième image médicale (I2), la première image médicale (I1) représentant une région d'intérêt d'un objet d'examen à un premier instant et la deuxième image médicale (I2) représentant la région d'intérêt de l'objet d'examen à un deuxième instant, le premier instant et le deuxième instant étant des instants différents,
- la fourniture d'un encodeur d'images (IE), l'encodeur d'images (IE) étant configuré et entraîné pour générer un plongement d'image sur la base d'une image médicale,
- pour chaque ensemble de données (DS) : la génération d'un plongement d'image (E) de la première image médicale (I1) en utilisant l'encodeur d'images (IE),
- la fourniture d'un modèle génératif conditionnel (CGM), le modèle génératif conditionnel (CGM) étant configuré pour générer une image médicale reconstruite sur la base d'une image médicale, d'une condition et de paramètres de modèle,
- l'entraînement du modèle génératif conditionnel (CGM), l'entraînement comprenant pour chaque ensemble de données (DS) :
• la génération d'une deuxième image médicale reconstruite (RI2) sur la base de la deuxième image médicale (I2) et du plongement d'image (E) de la première image médicale (I1), le plongement d'image (E) de la première image médicale (I1) étant utilisé comme condition lors de la génération de la deuxième image médicale reconstruite (RI2),
• la détermination d'un écart entre la deuxième image médicale (I2) et la deuxième image médicale reconstruite (RI2),
• la réduction de l'écart par modification de paramètres de modèle du modèle génératif conditionnel (CGM),
- la réception d'au moins une image médicale (Iⁿ) d'un nouvel objet d'examen, l'au moins une image médicale (Iⁿ) représentant la région d'intérêt du nouvel objet d'examen au premier instant,
- la génération d'au moins un plongement d'image (Eⁿ) sur la base de l'au moins une image médicale (Iⁿ) du nouvel objet d'examen en utilisant l'encodeur d'images (IE),
- la génération d'une image médicale synthétique (SI) en utilisant l'au moins un plongement d'image (Eⁿ) comme entrée conditionnelle dans le modèle génératif conditionnel entraîné (CGM^{t}),
- la sortie et/ou le stockage de l'image médicale synthétique (SI) et/ou la transmission de l'image médicale synthétique (SI) à un système informatique séparé,
dans lequel les au moins deux images médicales (I1, I2) de chaque ensemble de données (DS) sont des images IRM et/ou des images CT, et l'au moins une image médicale (Iⁿ) du nouvel objet d'examen est une image IRM ou une image CT.

2. Procédé selon la revendication 1, dans lequel chaque objet d'examen de la pluralité d'objets d'examen est un être humain, le nouvel objet d'examen est un être humain, et la région d'intérêt de chaque objet d'examen de la pluralité d'objets d'examen et la région d'intérêt du nouvel objet d'examen est ou comprend un foie, un rein, un cœur, un poumon, un cerveau, un estomac, une vessie, une prostate, un intestin, une thyroïde, un œil, un sein ou une partie des parties mentionnées ou une autre partie du corps de l'objet d'examen.

3. Procédé selon l'une quelconque des revendications 1 à 2, dans lequel les au moins deux images médicales (I1, I2) de chaque ensemble de données (DS) sont des images IRM, et l'au moins une image médicale (Iⁿ) du nouvel objet d'examen est une image IRM.

4. Procédé selon l'une quelconque des revendications 1 à 2,
dans lequel chaque ensemble de données (DS) comprend un nombre p de premières images médicales et la deuxième image médicale,
dans lequel les p premières images médicales représentent la région d'intérêt de l'objet d'examen à q instants différents et la deuxième image médicale représente la région d'intérêt de l'objet d'examen à un instant différent des q instants, p étant 1, 2, 3, 4, 5, 6, 7, 8, 9 ou 10, q étant 1, 2, 3, 4, 5, 6, 7, 8, 9 ou 10, et p ≥ q.

5. Procédé selon l'une quelconque des revendications 1 à 4,
dans lequel les au moins deux images médicales de chaque ensemble de données (DS) comprennent plusieurs premières images médicales et la deuxième image médicale,
dans lequel chaque première image médicale des plusieurs premières images médicales représente la région d'intérêt de l'objet d'examen à un instant différent,
dans lequel la génération d'un plongement d'image de la première image médicale en utilisant l'encodeur d'images (IE) comprend : la génération d'un plongement d'image (E1, E2, E3) de chaque première image médicale et la combinaison des plongements d'images (E1, E2, E3) en un plongement d'image combiné (EC),
dans lequel la génération d'une deuxième image médicale reconstruite (RI2) sur la base de la deuxième image médicale et du plongement d'image de la première image médicale comprend : la génération d'une deuxième image médicale reconstruite (RI2) sur la base de la deuxième image médicale et du plongement d'image combiné (EC) des premières images médicales, le plongement d'image combiné (EC) des premières images médicales étant utilisé comme condition lors de la génération de la deuxième image médicale reconstruite (RI2).

6. Procédé selon la revendication 5,
dans lequel la réception d'au moins une image médicale d'un nouvel objet d'examen comprend : la réception de plusieurs images médicales du nouvel objet d'examen,
dans lequel chaque image médicale des plusieurs images médicales représente la région d'intérêt du nouvel objet d'examen à un instant différent,
dans lequel la génération d'au moins un plongement d'image sur la base de l'au moins une image médicale du nouvel objet d'examen en utilisant l'encodeur d'images (IE) comprend : la génération d'un plongement d'image (E1ⁿ, E2ⁿ, E3ⁿ) de chaque image médicale des plusieurs images médicales en utilisant l'encodeur d'images (IE) et la combinaison des plongements d'images (E1ⁿ, E2ⁿ, E3ⁿ) en un plongement d'image combiné (ECⁿ),
dans lequel la génération de l'image médicale synthétique (SI) en utilisant l'au moins un plongement d'image comme entrée conditionnelle dans le modèle génératif conditionnel (CGM^{t}) comprend : la génération de l'image médicale synthétique en utilisant le plongement d'image combiné (ECn) comme entrée conditionnelle dans le modèle génératif conditionnel (CGM^{t}).

7. Procédé selon l'une quelconque des revendications 1 à 6, dans lequel les au moins deux images médicales de chaque ensemble de données (DS) comprennent des images d'examens IRM à contraste dynamique avec agent de contraste hépatobiliaire et/ou des images d'examens CT multiphases avec agent de contraste, et dans lequel le premier instant correspond à une phase transitoire de l'examen IRM à contraste dynamique ou de l'examen CT multiphases et le deuxième instant correspond à une phase hépatobiliaire de l'examen IRM à contraste dynamique avec agent de contraste hépatobiliaire ou une phase tardive de l'examen CT multiphases avec agent de contraste, et dans lequel l'image médicale synthétique représente le foie ou une partie de celui-ci du nouvel objet d'examen dans une phase hépatobiliaire de l'examen IRM à contraste dynamique.

8. Procédé selon l'une quelconque des revendications 1 à 7, dans lequel le modèle génératif conditionnel (CGM) comprend un modèle de diffusion comprenant un modèle de bruitage et un modèle de débruitage.

9. Procédé selon l'une quelconque des revendications 1 à 8, dans lequel l'encodeur d'images (IE) comprend un transformeur visuel, dans lequel le procédé comprend une division des images médicales en zones d'images partielles et un traitement des zones d'images partielles.

10. Procédé selon l'une quelconque des revendications 1 à 9, dans lequel l'entraînement du modèle génératif conditionnel (CGM) comprend en outre, pour chaque ensemble de données (DS) :
- le masquage d'au moins une partie de la première image et/ou du plongement d'image.

11. Procédé selon l'une quelconque des revendications 1 à 10, dans lequel la fourniture de l'encodeur d'images (IE) comprend l'entraînement de l'encodeur d'images (IE), l'entraînement de l'encodeur d'images (IE) comprenant, pour chaque ensemble de données (DS) :
- la génération d'un plongement d'image (E) de la première image médicale (I1),
- la génération d'une deuxième image médicale reconstruite sur la base de la deuxième image médicale et du plongement d'image de la première image médicale, le plongement d'image étant utilisé comme condition lors de la génération de la deuxième image médicale reconstruite,
- la détermination d'un écart entre la deuxième image médicale (I2) et la deuxième image médicale reconstruite,
- la réduction de l'écart par modification de paramètres de l'encodeur d'images.

12. Procédé selon la revendication 11,
dans lequel les au moins deux images médicales de chaque ensemble de données (DS) comprennent plusieurs premières images médicales et la deuxième image médicale,
dans lequel chaque première image médicale des plusieurs premières images médicales représente la région d'intérêt de l'objet d'examen à un instant différent,
dans lequel la génération d'un plongement d'image de la première image médicale en utilisant l'encodeur d'images (IE) comprend : la génération d'un plongement d'image de chaque première image médicale et la combinaison des plongements d'images en un plongement d'image combiné (EC),
dans lequel la génération d'une deuxième image médicale reconstruite sur la base de la deuxième image médicale et du plongement d'image de la première image médicale comprend : la génération d'une deuxième image médicale reconstruite sur la base de la deuxième image médicale et du plongement d'image combiné (EC) des premières images médicales, le plongement d'image combiné (EC) des premières images médicales étant utilisé comme condition lors de la génération de la deuxième image médicale reconstruite.

13. Système informatique (1), comprenant :
un processeur (20) ; et
une mémoire (50) stockant un programme d'application (60) configuré pour, lors de son exécution par le processeur (20), effectuer une opération, l'opération comprenant :
- la fourniture d'une pluralité d'ensembles de données d'une pluralité d'objets d'examen, chaque ensemble de données (DS) comprenant au moins deux images médicales, une première image médicale (I1) et une deuxième image médicale (I2), la première image médicale (I1) représentant une région d'intérêt d'un objet d'examen à un premier instant et la deuxième image médicale (I2) représentant la région d'intérêt de l'objet d'examen à un deuxième instant, le premier instant et le deuxième instant étant des instants différents,
- la fourniture d'un encodeur d'images (IE), l'encodeur d'images (IE) étant configuré et entraîné pour générer un plongement d'image sur la base d'une image médicale,
- pour chaque ensemble de données (DS) : la génération d'un plongement d'image de la première image médicale (I1) en utilisant l'encodeur d'images (IE),
- la fourniture d'un modèle génératif conditionnel (CGM), le modèle génératif conditionnel (CGM) étant configuré pour générer une image médicale reconstruite sur la base d'une image médicale, d'une condition et de paramètres de modèle,
- l'entraînement du modèle génératif conditionnel (CGM), l'entraînement comprenant pour chaque ensemble de données (DS) :
• la génération d'une deuxième image médicale reconstruite (RI2) sur la base de la deuxième image médicale (I2) et du plongement d'image de la première image médicale (I1), le plongement d'image de la première image médicale (I1) étant utilisé comme condition lors de la génération de la deuxième image médicale reconstruite (RI2),
• la détermination d'un écart entre la deuxième image médicale (I2) et la deuxième image médicale reconstruite (RI2),
• la réduction de l'écart par modification de paramètres de modèle du modèle génératif conditionnel (CGM),
- la réception d'au moins une image médicale (Iⁿ) d'un nouvel objet d'examen, l'au moins une image médicale (Iⁿ) représentant la région d'intérêt du nouvel objet d'examen au premier instant,
- la génération d'au moins un plongement d'image (Eⁿ) sur la base de l'au moins une image médicale (Iⁿ) du nouvel objet d'examen en utilisant l'encodeur d'images (IE),
- la génération d'une image médicale synthétique (SI) en utilisant l'au moins un plongement d'image (Eⁿ) comme entrée conditionnelle dans le modèle génératif conditionnel entraîné (CGM^{t}),
- la sortie et/ou le stockage de l'image médicale synthétique (SI) et/ou la transmission de l'image médicale synthétique (SI) à un système informatique séparé,
dans lequel les au moins deux images médicales (I1, I2) de chaque ensemble de données (DS) sont des images IRM et/ou des images CT, et l'au moins une image médicale (Iⁿ) du nouvel objet d'examen est une image IRM ou une image CT.

14. Support de stockage non volatil lisible par ordinateur stockant des instructions logicielles qui, lorsqu'elles sont exécutées par un processeur, effectuent une opération, l'opération comprenant :
- la fourniture d'une pluralité d'ensembles de données d'une pluralité d'objets d'examen, chaque ensemble de données (DS) comprenant au moins deux images médicales, une première image médicale (I1) et une deuxième image médicale (I2), la première image médicale (I1) représentant une région d'intérêt d'un objet d'examen à un premier instant et la deuxième image médicale (I2) représentant la région d'intérêt de l'objet d'examen à un deuxième instant, le premier instant et le deuxième instant étant des instants différents,
- la fourniture d'un encodeur d'images (IE), l'encodeur d'images (IE) étant configuré et entraîné pour générer un plongement d'image sur la base d'une image médicale,
- pour chaque ensemble de données (DS) : la génération d'un plongement d'image de la première image médicale (I1) en utilisant l'encodeur d'images (IE),
- la fourniture d'un modèle génératif conditionnel (CGM), le modèle génératif conditionnel (CGM) étant configuré pour générer une image médicale reconstruite sur la base d'une image médicale, d'une condition et de paramètres de modèle,
- l'entraînement du modèle génératif conditionnel (CGM), l'entraînement comprenant pour chaque ensemble de données (DS) :
• la génération d'une deuxième image médicale reconstruite (RI2) sur la base de la deuxième image médicale (I2) et du plongement d'image de la première image médicale (I1), le plongement d'image de la première image médicale (I1) étant utilisé comme condition lors de la génération de la deuxième image médicale reconstruite (RI2),
• la détermination d'un écart entre la deuxième image médicale (I2) et la deuxième image médicale reconstruite (RI2),
• la réduction de l'écart par modification de paramètres de modèle du modèle génératif conditionnel (CGM),
- la réception d'au moins une image médicale (Iⁿ) d'un nouvel objet d'examen, l'au moins une image médicale (Iⁿ) représentant la région d'intérêt du nouvel objet d'examen au premier instant,
- la génération d'au moins un plongement d'image (Eⁿ) sur la base de l'au moins une image médicale (Iⁿ) du nouvel objet d'examen en utilisant l'encodeur d'images (IE),
- la génération d'une image médicale synthétique (SI) en utilisant l'au moins un plongement d'image (Eⁿ) comme entrée conditionnelle dans le modèle génératif conditionnel entraîné (CGM^{t}),
- la sortie et/ou le stockage de l'image médicale synthétique (SI) et/ou la transmission de l'image médicale synthétique (SI) à un système informatique séparé,
dans lequel les au moins deux images médicales (I1, I2) de chaque ensemble de données (DS) sont des images IRM et/ou des images CT, et l'au moins une image médicale (Iⁿ) du nouvel objet d'examen est une image IRM ou une image CT.
